(19) Europäisches Patentamt
European Patent Office
Office européen des brevets

(11) **EP 4 721 838 A1**

(12) **EUROPEAN PATENT APPLICATION**

(43) Date of publication:
08.04.2026 Bulletin 2026/15

(21) Application number: 25206056.1

(22) Date of filing: 01.10.2025

(51) International Patent Classification (IPC):
*B01D 53/00* (2006.01)    *B01D 53/22* (2006.01)
*B01D 53/26* (2006.01)    *B01D 53/30* (2006.01)

(52) Cooperative Patent Classification (CPC):
**B01D 53/268; B01D 53/002; B01D 53/22;**
**B01D 53/30;** B01D 2256/22; B01D 2256/245;
B01D 2257/504; B01D 2257/80; B01D 2258/05

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 01.10.2024 US 202463702115 P

(71) Applicant: Haffmans B.V.
5928 PW Venlo (NL)

(72) Inventors:
• ROODBEEN, J.E.
Venlo (NL)
• BANOS, Konstantinos
Athens (GR)
• VAN ESSEN, Machiel
Geldrop (NL)
• TINOCO, Rodrigo Rivera
Venlo (NL)

(74) Representative: Viering, Jentschura & Partner
mbB
Patent- und Rechtsanwälte
Am Brauhaus 8
01099 Dresden (DE)

(54) **MEMBRANE-BASED PROCESS GAS DRYING WITH LOW PRESSURE GASEOUS STREAMS SYSTEM AND METHOD**

(57) A system for separating a gas mixture is provided. The system includes a source of a gas mixture comprising methane, carbon dioxide, and water, a first membrane stage in fluid communication with the source, and a process gas drying unit including a membrane. The first membrane stage is designed to separate the gas mixture into a first retentate stream and a first permeate stream. The process gas drying unit is in fluid communication with the first permeate stream and creates a dehydrated gas stream from the first permeate stream. The system also includes a measuring device designed to measure a parameter of the dehydrated gas stream to determine a measured value, a valve in fluid communication with the process gas drying unit, and a controller in communication with the measuring device and the valve. The controller is designed to actuate the valve in response to the measured value.

FIG. 1

EP 4 721 838 A1

**Description**

CROSS-REFERENCE TO RELATED APPLICATIONS

This application claims priority under 35 U.S.C. § 119 to U.S. Provisional Application No. 63/702,115, filed October 1, 2024, entitled "MEMBRANE-BASED PROCESS GAS DRYING WITH LOW PRESSURE GASEOUS STREAMS SYSTEM AND METHOD," the entirety of which is hereby incorporated by reference.

FIELD OF DISCLOSURE

The present disclosure relates generally to a system for drying a process gas in a gas separation system, and more specifically to a membrane-based unit for drying a process gas.

BACKGROUND

Polymeric gas separation membranes are well known and commonly used in industry to purify, upgrade, and/or remove a selected component from gas mixtures. Common industrial uses for gas separation membranes include the recovery of hydrogen from gas mixtures (e.g., ammonia or oil refinery process streams), the recovery of methane from gas mixtures (e.g., natural gas or biogas), the recovery of carbon dioxide from gas mixtures (e.g., natural gas or biogas), the production of oxygen-enriched air, and/or the removal of impurities from gas streams (e.g., removal of water, volatile organic compounds, and $H_2S$).

Separation systems can be used to separate methane and/or carbon dioxide from biogas or natural gas streams. Methane, especially biomethane purified from biogas, is a desirable product as it can be used in a variety of commercial applications, such as a source of energy for heating, to produce chemicals, or for use as a fuel, among other applications. The purification of methane from a biogas or natural gas stream involves separating methane from carbon dioxide in the gas stream.

The separation of methane from carbon dioxide using selectively permeable polymeric membrane materials is known. Separation systems that produce high-purity biomethane and a carbon dioxide waste stream from biogas are also known. More recently, separation systems that produce high-purity biomethane from biogas and recover the carbon dioxide waste stream have been developed. The recovered carbon dioxide waste stream may be processed to yield a purified liquid, solid, and/or gaseous carbon dioxide product, thereby providing additional commercially useful product(s) and potentially reducing the carbon footprint of the entire process. However, recovering the carbon dioxide waste stream may involve additional complexity, including additional steps and/or additional equipment. There remains a need for improvements to existing commercial gas separation processes that produce purified methane and purified carbon dioxide (from the recovered carbon dioxide waste stream), without adding complexity to the process.

SUMMARY

The separation systems and methods of the present disclosure, using an improved process and superior process controls, produce high-purity biomethane product(s) and purified carbon dioxide product(s) at an industrial scale, in an efficient and cost-effective manner.

A system for separating a gas mixture is provided. The system includes a source of the gas mixture and a first membrane stage in fluid communication with the source of the gas mixture. The gas mixture comprises methane, carbon dioxide, and water, and the first membrane stage is designed to separate the gas mixture into a first retentate stream and a first permeate stream. The system further includes a process gas drying unit including a membrane, wherein the process gas drying unit is in fluid communication with the first permeate stream provided from the first membrane stage. The process gas drying unit is designed to create a dehydrated gas stream from the first permeate stream. The system also includes a measuring device, a valve, and a controller. The measuring device is designed to measure a parameter of the dehydrated gas stream to determine a measured value, the valve is in fluid communication with the process gas drying unit, and the controller is in electrical communication with the measuring device and the valve. The controller is designed to actuate the valve in response to the measured value.

In some instances, a permeate sweep stream is provided to the process gas drying unit and the dehydrated gas stream contains less than 10 ppm(v) water. In some instances, the dehydrated gas stream is imparted with a dewpoint of no more than -20°C to no less than -75°C.

In some instances, a pressure of the dehydrated gas stream is imparted with a value of about 2 bar to about 20 bar.

In some instances, the dehydrated gas stream is imparted with a water concentration of less than about 10 ppm(v).

In some instances, the parameter is selected from the group consisting of a pressure value, a temperature value, a flow rate, a composition value, a viscosity value, a humidity value, a moisture content value, a dewpoint value, a density value, and combinations thereof. The system for separating a gas mixture may further include at least one gas transport device.

In some instances, the system for separating a gas mixture includes a first gas transport device with a first inlet in fluid communication with the gas mixture and a first outlet in fluid communication with the first membrane stage.

In some instances, the controller is designed to determine a comparison of the measured value against a set-point value of the parameter and actuate or maintain a position of the valve based on the determination.

In other instances, the system further includes a gas recovery unit that produces a purified product stream and an off-gas, wherein the off-gas is provided to the process gas drying unit as a sweep stream.

In some instances, the system further includes a second membrane stage in fluid communication with the first membrane stage, the second membrane stage designed to separate the first retentate stream into a second retentate stream and a second permeate stream.

In other instances, the system for separating a gas mixture may further include a second membrane stage in fluid communication with the first membrane stage, the second membrane stage configured to separate the first permeate stream into a second retentate stream and a second permeate stream.

In another aspect, a system for separating a gas mixture is provided. The system includes a source of the gas mixture, a first membrane stage in fluid communication with the source of the gas mixture, and a first drying module. The first membrane stage is configured to separate the gas mixture into a first retentate stream and a first permeate stream. The first drying module is in fluid communication with the first membrane stage and is designed to receive the first permeate stream to produce a dried gas stream from the first permeate stream. The system further includes a carbon dioxide recovery system downstream of the first drying module, wherein the carbon dioxide recovery system is configured to receive the dried gas stream and produce a sweep stream and a product stream.

In some instances, the system may further include a second membrane stage in fluid communication with the first membrane stage, where the second membrane stage is designed to process the first retentate stream. In some such instances, a second drying module is in fluid communication with the second membrane stage.

In other instances, the system may further include a valve in fluid communication with the sweep stream and a controller designed to actuate the valve to change an amount of the sweep stream provided to the first drying module.

In some instances, the sweep stream includes a purged off-gas produced by the carbon dioxide recovery system and the sweep stream is provided to the first drying module.

In other instances, the carbon dioxide recovery system includes a liquefaction unit designed to condense the first retentate stream.

In another aspect, a method for separating a gas mixture is provided. The method includes providing a gas mixture comprising methane, carbon dioxide, and water, feeding the gas mixture to a first membrane stage to separate the gas mixture into a first retentate stream and a first permeate stream, and feeding the first permeate stream to a membrane dryer to remove water from the first permeate stream, thereby producing a dehydrated gas stream. The dehydrated gas stream may be imparted with a dewpoint of no more than about -20°C to no less than about -75°C. In certain cases, the method may utilize or be used with any of the systems for separating a gas mixture described above.

In some instances, the method further includes providing the dehydrated gas stream to a gas recovery unit that generates a purified product gas and an off-gas and providing the off-gas to the membrane dryer as a sweep gas.

In other instances, the method further includes feeding the first retentate stream to a second membrane stage to separate the first retentate stream into a second retentate stream and a second permeate stream.

In some instances, a first concentration of methane in the second retentate stream is greater than a second concentration of methane in the gas mixture or the first retentate stream.

In other instances, the method further includes condensing the dehydrated gas stream to form a liquefied stream of purified carbon dioxide.

In some instances, a membrane of the membrane dryer is imparted with a $H_2O/CO_2$ selectivity of about 1 to about 2000.

DESCRIPTION OF THE DRAWINGS

FIG. 1 is a block diagram of a system for separating a gas mixture in accordance with the teachings of the present disclosure;
FIG. 2 is a block diagram of another system for separating a gas mixture;
FIG. 3 is a block diagram of a further system for separating a gas mixture;
FIG. 4 is a block diagram of a plurality of membranes that may be provided within the membrane separation stages and/or the membrane dryers described with reference to FIGS. 1-3; and

FIG. 5 is a block diagram of an example system for recovering carbon dioxide in accordance with the teachings of the present disclosure.

While the disclosure is susceptible to various modifications and alternative forms, a specific embodiment thereof is shown by way of example in the drawings and will herein be described in detail. It should be understood, however, that the drawings and detailed description presented herein are not intended to limit the disclosure to the particular embodiment disclosed, but to the contrary, the intention is to cover all modifications, equivalents, and alternatives falling within the spirit and scope of the present disclosure as defined by the appended claims.

DETAILED DESCRIPTION

Before any instances of the invention are explained in detail, it is to be understood that the invention is not limited in its application to the details of construction and the arrangement of components set forth in the following description or illustrated in the following drawings. The invention is capable of other instances and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The numerical ranges disclosed herein include all values from, and including, the lower and upper values. For ranges containing explicit values (e.g., a range from 1, or 2, or 3 to 5, or 6, or 7), any subrange between any two explicit values is included (e.g., the range 1-7 above includes subranges 1 to 2; 2 to 6; 5 to 7; 3 to 7; 5 to 6; etc.).

It is understood that the sum of the components in each of the mixtures, compositions, streams, lines, and products disclosed herein yields 100 mole percent.

It is understood that the relative amount of gas streams compared to each other encompasses any percent composition used in the art, including, by way of non-limiting example, percent by weight (% $w_1/w_2$), percent by mass (% $m_1/m_2$), percent by volume (% normalized $v_1/v_2$), percent by moles (% $n_1/n_2$), and percent by concentration (e.g., % $M_1/M_2$, % $m_1/m_2$). It is further understood that the subscripts "1" and "2" can refer to any gas stream or component within the system.

The term "line" refers to a physical connection between two points. Nonlimiting examples of suitable lines include tubes and pipes. The term "stream" refers to the composition, mixture, or component, contained within and/or passing through a line. It is understood that the terms "line" and "stream" may be used interchangeably herein, such that, for example, the feed line may be referred to herein as the feed stream (and vice versa).

The terms "membrane drying stage," "membrane dryer," "process gas drying module," "gas drying module," "process gas dryer," and "drying module" may be used interchangeably herein.

The following discussion is presented to enable a person skilled in the art to make and use instances of the disclosure. Various modifications to the illustrated instances will be readily apparent to those skilled in the art, and the generic principles herein can be applied to other instances and applications without departing from instances of the disclosure. Thus, instances of the disclosure are not intended to be to instances shown, but are to be accorded the widest scope consistent with the principles and features disclosed herein. The following detailed description is to be read with reference to the figures, in which like elements in different figures have like reference numerals. The figures, which are not necessarily to scale, depict selected instances and are not intended to limit the scope of instances of the disclosure. Skilled artisans will recognize the examples provided herein have many useful alternatives and fall within the scope of instances of the disclosure.

Additionally, while the following discussion may describe features associated with specific devices or instances, it is understood that additional devices and/or features can be used with the described systems and methods, and that the discussed devices and features are used to provide examples of possible instances, without being limited.

Systems **for Separating** a Gas **Mixture**

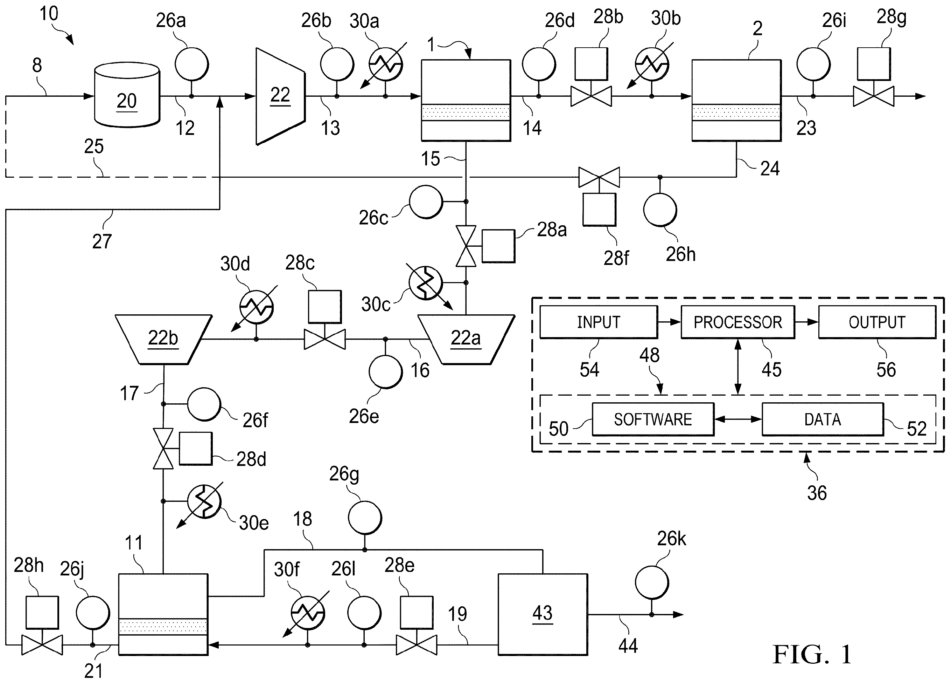

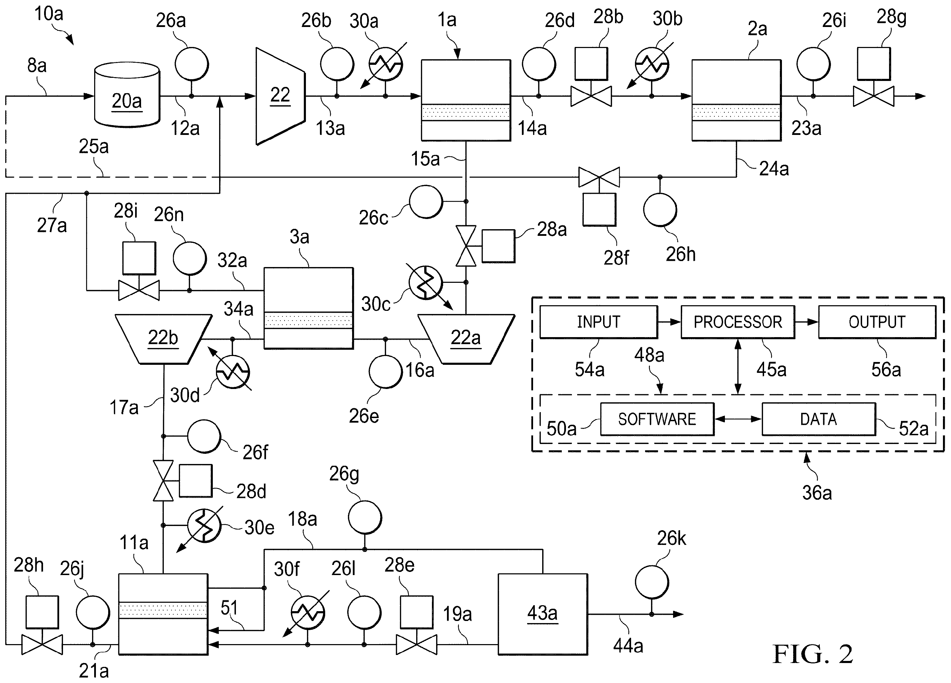

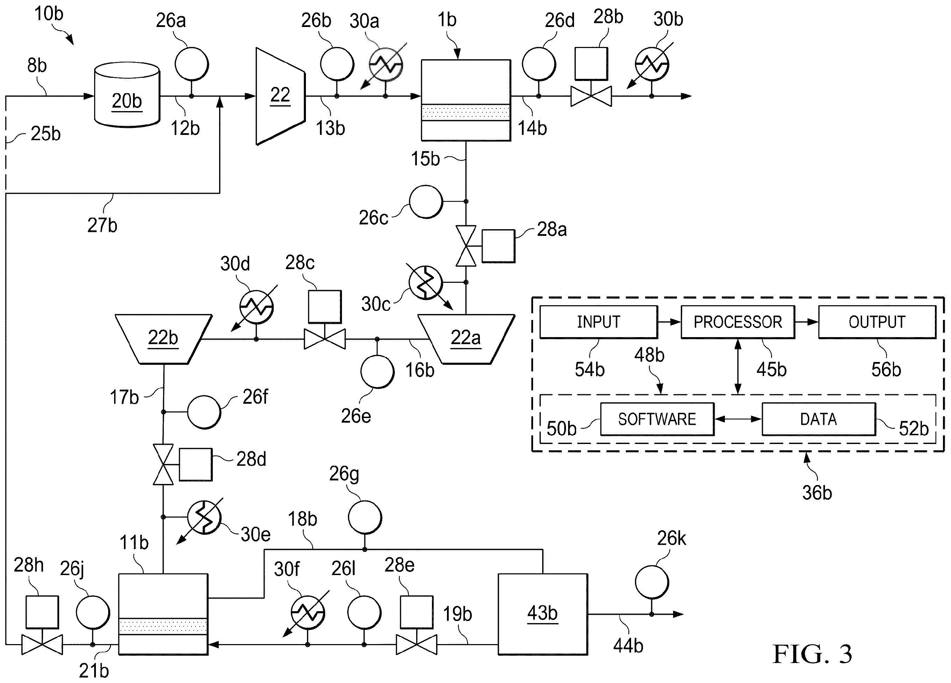

Referring now to FIGS. 1-3, a system 10, 10a, 10b for separating a gas mixture is shown. In some instances, the gas mixture may comprise natural gas or biogas. The gas mixture may comprise methane, carbon dioxide, $O_2$, $N_2$, $H_2$, and/or water, among other substances or compounds. The system 10 of FIG. 1, the system 10a of FIG. 2, and the system 10b of FIG. 3 may have substantially the same functionalities and capabilities. Generally, when comparing the system 10a of FIG. 2, the system 10b of FIG. 3, and the system 10 of FIG. 1, elements with similar names and element numbers may have substantially similar structures and functions.

The system 10, 10a, 10b may include at least one membrane separation stage, e.g., a first membrane separation stage 1, 1a, 1b, that separates the gas mixture to generate one or more product gas streams and at least one membrane drying stage (e.g., a process gas drying module 11, 11a, 11b) configured or designed to remove moisture from at least one process stream generated by the system 10, 10a, 10b. The system 10, 10a, 10b may generate various process streams and each process stream may be imparted with a certain concentration of water. Any of the process streams may be provided to at least one membrane drying stage (e.g., a process gas drying module 11, 11a, 11b) to remove water from the process stream and generate a dehydrated or dried process stream imparted with a reduced concentration of water.

In some instances, the process gas drying module 11, 11b may be fluidly coupled to a first membrane separation stage 1, 1b configured or designed to provide a first permeate stream and a first retentate stream from a gas mixture, such that the first permeate stream 15, 15b is fed to the process gas drying module 11, 11b. In some instances, the first membrane drying stage may be fluidly coupled to a second membrane separation stage configured or designed to provide a second permeate stream and a second retentate stream from a gas mixture (e.g., a first retentate stream), such that the second permeate stream is fed to the first membrane drying stage (not shown). Generally, in a system including multiple membrane separation stages, the at least one membrane drying stage may be fluidly coupled to any of the membrane separation stages. Preferably, in a system including multiple membrane separation stages, the at least one membrane drying stage is fluidly coupled to the first membrane separation stage.

The at least one membrane drying stage may comprise one or more process gas drying modules 11, 11a, 11b. Process gas drying modules 11, 11a, 11b may be membrane-based drying modules, each module comprising at least one gas drying membrane configured or designed to allow water in the process streams to selectively pass through the membrane as permeate, while retaining the other components of the process streams as retentate. Thus, the process gas drying modules 11, 11a, 11b may generate retentate streams imparted with a moisture content lower than the moisture content of the streams provided to the process gas drying module 11, 11a, 11b, i.e., dehydrated product streams or dehydrated gas streams 18, 18a, 18b.

At least one of the product gases generated by the system 10, 10a, 10b may be a dried product gas. Such a dried product gas may be generated by the at least one membrane drying stage (e.g., a process gas drying module 11, 11a, 11b). Generally, a product gas provided to the process gas drying module 11, 11a, 11b may be imparted with a first concentration of water. The process gas drying module 11, 11a, 11b may separate water from the product gas, thereby generating the dried product gas. In such instances, the dried product gas may be imparted with a second concentration of water that is less than the first concentration of water.

The system 10, 10a, 10b may optionally include multiple membrane drying stages (not shown). Each of the membrane drying stages may include membrane(s) imparted with the same selectivity values, or the membrane drying stages may include different types of membrane(s) when compared to one another. For example, the system 10, 10a, 10b may include a first membrane drying stage and a second membrane drying stage. In some instances, the first membrane drying stage may be fluidly coupled to a first membrane separation stage configured or designed to provide a first permeate stream and a first retentate stream from a gas mixture. The first permeate stream may be fed to the first membrane drying stage. The first membrane drying stage may generate a first dried retentate stream and a first hydrated (sweep) stream. The first dried retentate stream may be imparted with a concentration of water that is less than the concentration of water in the first permeate stream. In some instances, the second membrane drying stage may be fluidly coupled to a second membrane separation stage configured or designed to provide a second permeate stream and a second retentate stream from a gas mixture (e.g., first retentate stream). The second permeate stream may be fed to the second membrane drying stage. The second membrane drying stage may generate a second dried retentate stream and a second hydrated (sweep) stream. The second permeate stream may be imparted with a third concentration of water. The second dried retentate stream may be imparted with a fourth concentration of water that is less than the third concentration of water of the second permeate stream. Additionally or alternatively, the one or more membrane drying stages (e.g., gas drying module 11, 11a, 11b) may optionally include a sweep gas flowing along the permeate side of the membrane(s) thereof to assist in separating the water from the gas mixture(s) provided to the one or more membrane drying stages (e.g., gas drying module 11, 11a, 11b).

In certain instances, as shown in FIGS. 1 and 2, the system 10, 10a optionally includes a second membrane separation stage 2, 2a. In some instances, as shown in FIG. 2, the system 10a optionally includes a third membrane separation stage 3a. In other instances, as shown in FIG. 3, the system 10b includes a first membrane separation stage 1b and no additional membrane separation stages.

For example, like the system 10 of FIG. 1, the system 10a of FIG. 2 may be provided with a first membrane separation stage 1a, a second membrane separation stage 2a, a process gas drying module 11a, gas transport devices (e.g., gas transport devices 22, 22a, 22b), process measuring devices (e.g., process measuring devices 26a-26n), and process control devices (e.g., one or more valves 28a-28i, one or more temperature control devices 30a-30f), and gas recovery or storage systems (e.g., a carbon dioxide recovery system 43a). For example, like the system 10 of FIG. 1 or the system 10a of FIG. 2, the system 10b of FIG. 3 may be provided with a first membrane separation stage 1b, a process gas drying module 11b, gas transport devices (e.g., gas transport devices 22, 22a, 22b), process measuring devices (e.g.,

process measuring devices 26a-g, 26j, 26k), and process control devices (e.g., one or more valves 28a-28e, 28h; one or more temperature control devices 30a-30f), and gas recovery or storage systems (e.g., a carbon dioxide recovery system 43b).

Unlike the system 10 of FIG. 1, the system 10a of FIG. 2 may be provided with a third membrane separation stage 3a in fluid communication with the permeate side of the first membrane separation stage 1a. Like the membrane separation stages 1a, 2a, the third membrane separation stage 3a may be configured or designed to provide a permeate stream and a retentate stream from a gas mixture. In this instance, the third membrane separation stage 3a may separate the first permeate stream 15a (or the optional second gas transport device discharge stream 16a, if the first permeate stream is provided to the second gas transport device 22a) into a third retentate stream 32a and a third permeate stream 34a. Similar to the first permeate stream 15 of FIG. 1, the third permeate stream 34a (or the optional third gas transport device discharge stream 17a if the third permeate stream 34a is provided to the third gas transport device 22b) may be provided to the process gas drying module 11a and the carbon dioxide recovery system 43a. In certain instances, a dehydrated gas stream 18a may be generated from the third permeate stream 34a or the optional third gas transport device discharge stream 17a. In some instances, the third retentate stream 32a may be further processed, discarded, and/or collected as a product. For example, the third retentate stream 32a may be recycled back, via an optional recycle line 27a, to the feed gas line 12a. Alternatively, or additionally, the third retentate stream 32a may be recycled, via an optional recycle line 25a, to the gas source 20a, for example, via a feed inlet 8a configured upstream of the gas source 20a.

Unlike the system 10 of FIG. 1 or the system 10a of FIG. 2, the system 10b of FIG. 3 may not be provided with a second membrane separation stage (i.e., the system 10b may only be provided with the first membrane separation stage 1b). Thus, the first retentate stream 14b may be provided as a product gas by the system 10b. The first membrane separation stage 1b may be configured or designed to provide a first permeate stream 15b and a first retentate stream 14b from a gas source 20b. In some instances, the first retentate stream 14b may be further processed in an additional system (not pictured) and/or collected as a product. The first permeate stream 15b may be fed to an optional second gas transport device 22a (e.g., a compressor) and/or an optional third gas transport device 22b (e.g., a compressor). The first permeate stream 15b, the optional second gas transport device discharge stream 16b, or the optional third gas transport device discharge stream 17b of FIG. 3 may be provided to the at least one membrane drying stage (e.g., process gas drying module 11b) and the carbon dioxide recovery system 43b. Thus, the first permeate stream may be compressed before being fed to the at least one membrane drying stage (e.g., a process gas drying module 11b). In certain instances, a dehydrated gas stream 18b may be generated from the first permeate stream 15b, the optional second gas transport device discharge stream 16b, or the optional third gas transport device discharge stream 17b.

The first membrane separation stage 1, 1a, 1b may be provided in fluid communication with a gas source 20, 20a, 20b, the gas source 20, 20a, 20b comprising a natural or man-made reservoir of a gas mixture. In some instances, the gas source 20, 20a, 20b may include natural gas or biogas comprising a variety of components, including methane, carbon dioxide, trace chemicals, water, or some combination thereof. The biogas may be produced from sources such as agricultural waste, manure, municipal waste, plant material, sewage, green waste, food waste, anaerobic digester, or combinations thereof, and transferred to the system 10, 10a, 10b for separation. The natural gas may be harvested from naturally occurring wells and provided to the system 10, 10a, 10b for separation. In certain instances, the system 10, 10a, 10b may comprise a pretreatment unit positioned between the gas source and the first membrane separation stage 1, 1a, 1b, where the pretreatment unit may be configured or designed to remove one or more contaminants from the gas mixture. For example, the pretreatment unit may include or be provided with an activated carbon media configured or designed to remove one or more contaminants from the gas mixture.

The product gas streams generated by the system 10, 10a, 10b may at least partially depend on the components of the gas mixture provided to the system 10, 10a, 10b. For example, if the gas source 20, 20a, 20b provides biogas to the first membrane separation stage 1, 1a, 1b, then the system may generate a first product gas stream comprising primarily methane and/or a second product gas stream comprising primarily carbon dioxide. The product gas streams generated by the system 10, 10a, 10b may be collected, stored, vented, further processed, provided to a transport pipeline, provided to an end user, utilized by the operator of the system 10, 10a, 10b, or some combination thereof, as desired.

In some instances, the system 10, 10a, 10b includes at least one gas transport device, e.g., a first gas transport device 22, having a suction side connected to a feed gas line 12, 12a, 12b and a discharge side connected to a gas transport discharge stream 13, 13a, 13b. The gas transport discharge stream 13, 13a, 13b places the first gas transport device 22 in fluid communication with the first membrane separation stage 1, 1a, 1b and the feed gas line 12, 12a, 12b places the gas transport device 22 in fluid communication with the gas source 20, 20a, 20b. In general, the gas transport device 22 may be provided as a mechanical device that adjusts (e.g., increases) the pressure of the gas mixture and may comprise a compressor, a blower or the like, or a combination thereof. In some instances, the first gas transport device 22 may be configured or designed to feed the gas mixture to the first membrane separation stage 1, 1a, 1b at a pressure of 1.5 bar (150 kPa) to 100 bar (10000 kPa), or 1.5 bar (150 kPa) to about 100 bar (10000 kPa), or more. For example, the gas mixture fed to the first membrane separation stage 1, 1a, 1b may be imparted with a range of pressures of at least about 5 bar (500 kPa) to at least about 90 bar (9000 kPa), or at least about 5 bar (500 kPa) to at least about 80 bar (8000 kPa), or at least about 5 bar (500 kPa) to at least about 70 bar (7000 kPa), or at least about 5 bar (500 kPa) to at least about 60 bar (6000 kPa), or at least about 5 bar (500 kPa) to at least about 50 bar (5000 kPa), or at least about 5 bar (500 kPa) to at least about 40 bar (4000 kPa), or at least about 5 bar (500 kPa) to at least about 30 bar (3000 kPa), or at least about 5 bar (500 kPa) to at least about 20 bar (2000 kPa), or at least about 5 bar (500 kPa) to at least about 10 bar (1000 kPa).

As an additional example, the gas mixture fed to the first membrane separation stage 1, 1a, 1b may be imparted with a range of pressures of at least 5 bar (500 kPa) to at least 90 bar (9000 kPa), or at least 5 bar (500 kPa) to at least 80 bar (8000 kPa), or at least 5 bar (500 kPa) to at least 70 bar (7000 kPa), or at least 5 bar (500 kPa) to at least 60 bar (6000 kPa), or at least 5 bar (500 kPa) to at least 50 bar (5000 kPa), or at least 5 bar (500 kPa) to at least 40 bar (4000 kPa), or at least 5 bar (500 kPa) to at least 30 bar (3000 kPa), or at least 5 bar (500 kPa) to at least 20 bar (2000 kPa), or at least 5 bar (500 kPa) to at least 10 bar (1000 kPa).

It is to be understood that the gas mixture fed to the first membrane separation stage 1, 1a, 1b may be imparted with a value, or a range of values, falling within any minimum value and any maximum value recited herein.

In some instances, the first gas transport device 22 may be provided elsewhere in the system 10, 10a, 10b. For example, the first gas transport device 22 may be fluidly coupled to the feed inlet 8, 8a, 8b. In other instances, the first gas transport device 22 may not be provided with the system 10, 10a, 10b. In some such instances, the gas source 20, 20a, 20b may retain or store the gas mixture at an elevated pressure such that a gas above ambient pressure is provided to the first membrane separation stage 1, 1a, 1b.

Generally, both the membrane separation stages 1, 2, 1a, 2a, 3a, 1b and/or the gas drying module 11, 11a, 11b may utilize membranes designed to separate components of a gas mixture based on solution diffusion across the membrane and/or size exclusion. The membrane itself may be provided in the form of a thin film that is manufactured from polymers, metals, or ceramics. The membrane material may be chosen based on the selectivity of the material for one or more components of the gas mixture (e.g., one or more components of the process stream(s)).

In some instances, the membrane separation stages 1, 2, 1a, 2a, 3a, 1b and/or the gas drying module 11, 11a, 11b may comprise one or more polymeric membranes, one or more ceramic membranes, one or more metal membranes, or a combination thereof. For example, the membrane separation stages 1, 2, 1a, 2a, 3a, 1b may comprise mixed-matrix membranes formed by incorporating an inorganic filler (e.g., a zeolite) into a continuous polymeric matrix (e.g., a polyimide). In other instances, the membrane separation stages 1, 2, 1a, 2a, 3a, 1b and/or the gas drying module 11, 11a, 11b may comprise polymeric membranes. For example, the one or more gas separation membranes used to construct the membrane separation stages 1, 2, 1a, 2a, 3a, 1b may comprise polyimides, polycarbonates, polyphenyl oxide, polysulfones, cellulose derivatives, polyethylene oxide, and/or combinations thereof. In other instances, the membrane separation stages 1, 2, 1a, 2a, 3a, 1b and/or the gas drying module 11, 11a, 11b may comprise inorganic membranes. For example, the membrane separation stages 1, 2, 1a, 2a, 3a, 1b may comprise zeolite membranes.

The membrane(s) of the process gas drying module 11, 11a, 11b may be provided in the form of a polymeric membrane that is highly selective for water. In some instances, the one or more gas separation membranes of the gas drying module 11, 11a, 11b may be imparted with a $H_2O/CO_2$ selectivity value of about 1 to about 2000 (or 1 to 2000). For example, the one or more gas separation membranes of the gas drying module 11, 11a, 11b may be imparted with a $H_2O/CO_2$ selectivity value of at least about 10, or at least about 10 to at least about 100, or at least about 10 to at least about 250, or at least about 10 to at least about 500, or at least about 10 to at least about 750, or at least about 10 to at least about 1000, or at least about 10 to at least about 1250, or at least about 10 to at least about 1750, or at least about 2000. As an additional example, the one or more gas separation membranes of the gas drying module 11, 11a, 11b may be imparted with a $H_2O/CO_2$ selectivity value of at least 10, or at least 10 to at least 100, or at least 10 to at least 250, or at least 10 to at least 500, or at least 10 to at least 750, or at least 10 to at least 1000, or at least 10 to at least 1250, or at least 1500 to at least 1750, or at least 2000. It is to be understood that the $H_2O/CO_2$ selectivity of the one or more gas separation membranes of the gas drying module 11, 11a, 11b may be imparted with any value falling between any minimum or maximum value recited above.

In some instances, the membrane(s) of the process gas drying module 11, 11a, 11b may comprise polydimethylsiloxane. In some such instances, the membrane(s) of the process gas drying module 11, 11a, 11b may be provided in the form of a hollow-fiber membrane. In some instances, the process gas drying module 11, 11a, 11b is provided in the form of a Fluidpro® membrane-based dryer sold by Pentair, Inc. Suitable membrane-based dryers also include PRISM® membrane dryers sold by Air Products (Allentown, PA), membrane dryers available from the Donaldson Company, Inc. (Leuven, Belgium), membrane dryers available from Atlas Copco (Rock Hill, SC), and membrane dryers available from Parker (Haverhill, MA).

A measure of the ability of a membrane to separate two gases is the selectivity, $\alpha$, defined as the ratio of the gas permeabilities, $P_1/P_2$. Selectivity can also be expressed as:

$$\alpha_{12} = \frac{P_1}{P_2} = \left[\frac{D_1}{D_2}\right]\left[\frac{k_1}{k_2}\right]$$

where D is the diffusion coefficient of the gas in the membrane [cm$^2$/s], which is a measure of the gas mobility, and k is Henry's law sorption coefficient, which links the concentration of the gas in the membrane material to the pressure in the adjacent gas [(cm$^3$ (STP))/(cm$^3$·cmHg)]. The ratio of the diffusion coefficients of the two gases, $D_1/D_2$, can be viewed as the mobility selectivity, reflecting the different sizes of the two molecules. The ratio of Henry's law sorption coefficients of the two gases, $k_1/k_2$, can be viewed as the solubility selectivity, reflecting the relative condensability of the two gases. Depending on the nature of the polymer, either the diffusion or the sorption component of the permeability may dominate.

In some instances, the one or more gas separation membrane(s) of the membrane separation stages 1, 2, 1a, 2a, 3a, 1b may be imparted with a $CO_2/CH_4$ selectivity that is greater than 1. In some instances, the gas separation membrane of the membrane separation stages 1, 2, 1a, 2a, 3a, 1b is imparted with a $CO_2/CH_4$ selectivity of 1 to 200. For example, the $CO_2/CH_4$ selectivity of the one or more gas separation membrane(s) of the membrane separation stages 1, 2, 1a, 2a, 3a, 1b may be imparted with a value of at least about 1, or at least about 5 to at least about 200, or at least about 10 to at least about 150, or at least about 20 to at least about 100, or at least about 30 to at least about 70, or at least about 40 to at least about 50. As an additional example, the $CO_2/CH_4$ selectivity of the one or more gas separation membrane(s) of the membrane separation stages 1, 2, 1a, 2a, 3a, 1b may be imparted with a value of at least 1, or at least 5 to at least 200, or at least 10 to at least 150, or at least 20 to at least 100, or at least 30 to at least 70, or at least 40 to at least 50. It is to be understood that the $CO_2/CH_4$ selectivity of the one or more gas separation membrane(s) of the membrane separation stages 1, 2, 1a, 2a, 3a, 1b may be imparted with a value falling between any minimum or maximum value recited above.

In some instances, the one or more gas separation membrane(s) of the membrane separation stages 1, 2, 1a, 2a, 3a, 1b may be imparted with a $CO_2/CH_4$ selectivity value of at least 5, or at least 10, or at least 15, or at least 20, or at least 25, or at least 30, or at least 35, or at least 40, or at least 45, or at least 50, or at least 55, or at least 60, or at least 65, or at least 70, or at least 75, or at least 80, or at least 85, or at least 90, or at least 95, or at least 100, or at least 110, or at least 120, or at least 130, or at least 140, or at least 150, or at least 160, or at least 170, or at least 180, or at least 190, or at least 200. In some instances, the one or more gas separation membrane(s) of the membrane separation stages 1, 2, 1a, 2a, 3a, 1b may be imparted with a $CO_2/CH_4$ selectivity value of at least about 5, or at least about 10, or at least about 15, or at least about 20, or at least about 25, or at least about 30, or at least about 35, or at least about 40, or at least about 45, or at least about 50, or at least about 55, or at least about 60, or at least about 65, or at least about 70, or at least about 75, or at least about 80, or at least about 85, or at least about 90, or at least about 95, or at least about 100, or at least about 110, or at least about 120, or at least about 130, or at least about 140, or at least about 150, or at least about 160, or at least about 170, or at least about 180, or at least about 190, or at least about 200. It is to be understood that the $CO_2/CH_4$ selectivity of the one or more gas separation membrane(s) of the membrane separation stages 1, 2, 1a, 2a, 3a, 1b may be imparted with a value falling between any minimum or maximum value described above.

In some instances, the one or more gas separation membrane(s) of the gas drying module 11, 11a, 11b may be imparted with a $H_2O/CO_2$ selectivity. The $H_2O/CO_2$ selectivity of the one or more gas separation membrane(s) of the gas drying module 11, 11a, 11b may be imparted with a value of at least 1, or a range of values between 1 and 200. For example, the $H_2O/CO_2$ selectivity may be imparted with a value of about 1 to about 200, or about 5 to about 200, or about 10 to about 200, or about 20 to about 200, or about 30 to about 200, or about 40 to about 200, or about 50 to about 200, or about 60 to about 200, or about 70 to about 200, or about 80 to about 200, or about 90 to about 200, or about 100 to about 200, or about 110 to about 200, or about 120 to about 200, or about 130 to about 200, or about 140 to about 200, or about 150 to about 200, or about 160 to about 200, or about 170 to about 200, or about 180 to about 200, or about 190 to about 200. As an additional example, the $H_2O/CO_2$ selectivity of the one or more gas separation membrane(s) of the gas drying module 11, 11a, 11b may be imparted with a value of 1 to 200, or 5 to 200, or 10 to 200, or 20 to 200, or 30 to 200, or 40 to 200, or 50 to 200, or 60 to 200, or 70 to 200, or 80 to 200, or 90 to 200, or 100 to 200, or 110 to 200, or 120 to 200, or 130 to 200, or 140 to 200, or 150 to 200, or 160 to 200, or 170 to 200, or 180 to 200, or 190 to 200. It is to be understood that the $H_2O/CO_2$ selectivity may be imparted with any value falling between any minimum or maximum value described above.

In some instances, the $H_2O/CO_2$ selectivity may be imparted with a value of at least about 10, or at least about 15, or at least about 20, or at least about 25, or at least about 30, or at least about 35, or at least about 40, or at least about 45, or at least about 50, or at least about 55, or at least about 60, or at least about 65, or at least about 70, or at least about 75, or at least about 80, or at least about 85, or at least about 90, or at least about 95, or at least about 100, or at least about 110, or at least about 120, or at least about 130, or at least about 140, or at least about 150, or at least about 160, or at least about 170, or at least about 180, or at least about 190, or at least about 200. In further instances, the $H_2O/CO_2$ selectivity may be imparted with a value of at least 10, or at least 15, or at least 20, or at least 25, or at least 30, or at least 35, or at least 40, or at least 45, or at least 50, or at least 55, or at least 60, or at least 65, or at least 70, or at least 75, or at least 80, or at least 85, or at least 90, or at least 95, or at least 100, or at least 110, or at least 120, or at least 130, or at least 140, or at least 150, or at least 160, or at least 170, or at least 180, or at least 190, or 200.

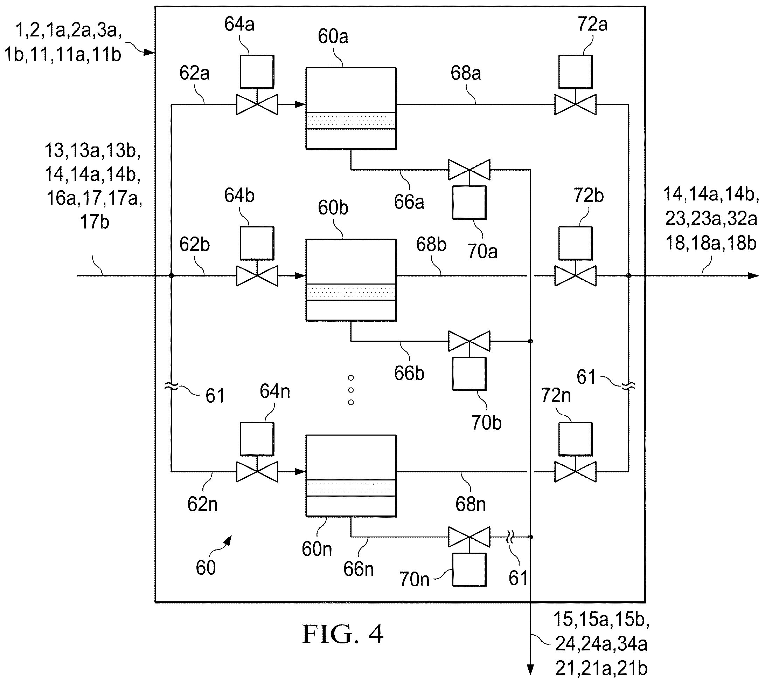

Optionally, the system 10, 10a, 10b may include more than one membrane drying stage (e.g., the gas drying module 11, 11a, 11b) (not shown) and/or more than one membrane separation stage 1, 2, 1a, 2a, 3a (e.g., see FIG. 1 and FIG. 2). If at least two membrane separation stages are provided, as shown in FIG. 2 (system 10a), the membrane separation stages may be arranged in series. In some instances, the system 10, 10a, 10b may include only one membrane separation stage, two membrane separation stages, or three or more membrane separation stages arranged in any configuration. For example, a system 10b in which only a single membrane separation stage 1b and a process gas drying module 11b are provided is illustrated in FIG. 3, while a system in which three membrane separation stages 1a, 2a, 3a and a process gas drying module 11b are provided is illustrated in FIG. 2. Similarly, if at least two process gas drying modules are provided, the gas drying modules may be arranged in series. The three or more process gas drying modules may include a first process gas drying module ($M_x$), a second process gas drying module ($M_{x+1}$), and one or more additional process gas drying modules ($M_n$) in fluid communication with an incoming stream and a sweep stream, where the sweep stream may be fed back from the additional process gas drying module ($M_n$) to an immediately preceding module ($M_{n-x}$) or the sweep stream may bypass the immediately preceding module and be fed back to another previous module. In some instances, the system may include only one process gas drying module, as shown in FIGS. 1-3, two process gas drying modules, or three or more process gas drying modules arranged in any configuration. Furthermore, as shown in FIG. 4 and described in more detail below, one or more of the process gas drying modules 11, 11a, 11b and/or one or more of the membrane separation stages 1, 2, 1a, 2a, 3a, 1b may include a plurality of membranes 60 arranged therein. The plurality of membranes 60 may be configured in parallel, as shown in FIG. 4, in which case the plurality of parallel configured membranes 60 may be considered a single drying or separation stage, where the surface area of the single drying or separation stage is increased with each additional membrane 60n.

Generally, gas permeation is driven by a partial pressure difference of the gas components from the feed side to the permeate side of the membrane. Several different methods for generating a partial pressure difference across a membrane can be utilized. For example, the pressure of the gas stream fed into a gas separation membrane of the membrane separation stages 1, 2, 1a, 2a, 3a, 1b and/or the membrane drying stage (e.g., gas drying module 11, 11a, 11b) may be increased. As yet another example, the pressure of the gas stream on the permeate side of the membrane may be reduced, such as by using a vacuum or vacuum pump (not illustrated) positioned in the permeate stream 15, 15a, 15b, 24, 24a, 34a, 21, 21a, 21b. In some instances, the first membrane separation stage 1, 1a, 1b, the second membrane separation stage 2, 2a, the third membrane separation stage 3a, and/or the process gas drying module 11, 11a, 11b may be fluidly coupled to one or more vacuum pumps arranged on a permeate side of the respective membrane separation stages 1, 2, 1a, 2a, 3a, 1b and/or the membrane drying stage (e.g., gas drying module 11, 11a, 11b) to help produce a pressure differential across the membrane separation stages 1, 2, 1a, 2a, 3a, 1b and/or the process gas drying module 11, 11a, 11b. Additionally, or alternatively, the first membrane separation stage 1, 1a, 1b, the second membrane separation stage 2, 2a, the third membrane separation stage 3a, and/or the one or more membrane drying stages (e.g., gas drying module 11, 11a, 11b) may optionally include a sweep gas flowing along the permeate side of the membrane(s) thereof to assist in separating the components of the gas mixtures provided to the membrane separation stages 1, 2, 1a, 2a, 3a, 1b and/or the one or more membrane drying stages (e.g., gas drying module 11, 11a, 11b).

Advantageously, providing a gas stream that is a component of the gas separation system 10, 10a, 10b as a sweep gas to the permeate side of the one or more gas separation membrane(s) of the gas drying module 11, 11a, 11b and/or the membrane separation stages 1, 2, 1a, 2a, 3a, 1b may alter the partial pressure of the gases on the permeate side of the membrane, thereby helping generate a larger partial pressure difference of permeating gas or gases across the membrane (without increasing complexity or cost). In some instances, at least a portion of a gas sourced from an apparatus, unit, or system that is downstream of the gas drying module 11, 11a, 11b and/or the membrane separation stages 1, 2, 1a, 2a, 3a, 1b may be provided as a sweep gas to the permeate side of the one or more gas separation membrane(s) of the gas drying module 11, 11a, 11b and/or the membrane separation stages 1, 2, 1a, 2a, 3a, 1b. The composition of the sweep gas may be the same or different from the composition of the feed stream, preferably different, provided that the water partial pressure on the sweep side is lower than the water partial pressure on the feed side. Preferably, the water partial pressure of the sweep stream is less than the water partial pressure of the feed stream.

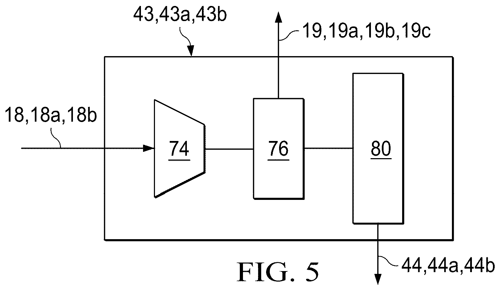

For example, as illustrated in FIGS. 1-3, the sweep stream 19, 19a, 19b may comprise off-gas purged from a carbon dioxide recovery system 43, 43a, 43b, as shown in FIG. 5, such as non-condensable gases (e.g., $CH_4$, $O_2$, $N_2$). As additional examples, the sweep stream 19, 19a, 19b may comprise purified carbon dioxide that would otherwise be withdrawn as the product stream 44, 44a, 44b provided from a carbon dioxide recovery system 43, 43a, 43b, an inert gas provided from another gas source coupled to the process gas drying module 11, 11a, 11b, and/or other gases.

In some instances, as shown in FIG. 2, at least a portion of the dehydrated gas stream 18a generated by the membrane drying stage 11a may be provided as a sweep gas to the permeate side of the one or more gas separation membrane(s) of the membrane drying stage 11a. For example, at least a portion of the dehydrated gas stream 18a may be provided as a sweep gas to the membrane drying stage 11a via a sweep line 51 that is in fluid communication with the dehydrated gas stream 18a and the membrane drying stage 11a. In some cases, the sweep line 51 may be fluidly coupled to the dehydrated gas stream 18a and the permeate side of the membrane drying stage 11a. Alternatively, the sweep line 51 may be positioned elsewhere in the system 10a. The portion of the dehydrated gas stream 18a provided via the sweep line 51 may thus, in some instances, bypass the carbon dioxide recovery system 43a.

In some cases, the sweep line 51 may include, or be in fluid communication with, one or more components designed to measure the gas stream flowing through the sweep line 51. In addition, the sweep line 51 may include, or be in fluid communication with, one or more components for controlling the gas stream flowing through the sweep line 51. For example, the sweep line 51 may include any of the components for measuring and control as included in the sweep stream 19a in system 10a, such as process measuring devices with similar functionality to the process measuring devices 261, 30f, and process control devices with similar functionality to the process control device 28e. As an additional example, the sweep line 51 may include any of the process measuring devices and process control devices described herein.

In some instances, the sweep line 51 may be positioned differently in the system 10a than illustrated in FIG. 2. For example, the sweep line 51 may be fluidly coupled to the dehydrated gas line 18a downstream of a process measuring device 26g. As an additional example, the sweep line 51 may be coupled to any portion of the sweep line 19a (e.g., a portion of the sweep line 19a upstream of the process control device 28e). It is to be appreciated that the location of the sweep line 51 is not limited to the examples provided herein.

It is to be understood that the sweep line 51 described with reference to FIG. 2 may also be included in the systems 10, 10b of FIGS. 1 and 3. For example, each of the systems 10, 10b may include a sweep line that places the dehydrated gas stream 18, 18b into fluid communication with the membrane drying stage 11, 11b. As such, at least a portion of the dehydrated gas stream 18, 18b may be provided to the membrane drying stage 11, 11b as a sweep stream.

Referring to FIGS. 1-3, in some cases, at least a portion of the dehydrated gas stream 18, 18a, 18b may be provided to the sweep line 19, 19a, 19b after passing through the carbon dioxide recovery system 43, 43a, 43b. In such instances, at least a portion of the dehydrated gas stream 18, 18a, 18b may flow through the carbon dioxide recovery system 43, 43a, 43b without transformation or further processing before being provided to the sweep line 19, 19a, 19b (e.g., at least a portion of the dehydrated gas stream 18, 18a, 18b may flow through an internal bypass of the carbon dioxide recovery system 43, 43a, 43b that is in fluid communication with the sweep line 19, 19a, 19b). As such, in some cases, at least a portion of the dehydrated gas stream 18, 18a, 18b may be used as a sweep gas that is provided to the membrane drying stage 11, 11a, 11b via the sweep line 19, 19a, 19b.

The system 10, 10a, 10b disclosed in FIGS. 1-3 offers several advantages over conventional systems. For example, one advantage of using the process gas drying module 11, 11a, 11b to dry the third gas transport device discharge stream 17, 17a, 17b (or, e.g., the first permeate stream 15, 15a, 15b if the gas transport devices 22a and 22b are not provided) is that it allows for a reduction in the total amount of energy required to operate the system. Off-gas from the $CO_2$ recovery system 43, 43a, 43b may be recycled back to the process gas drying module 11, 11a, 11b as the sweep stream 19, 19a, 19b flows along the permeate side of the membrane(s) of the process gas drying module 11, 11a, 11b. The use of the process gas drying module 11, 11a, 11b eliminates the need for a dryer unit (e.g., based on semi-continuous temperature swing adsorption) to dry the third gas transport device discharge stream 17, 17a, 17b. This also reduces the overall footprint of the system 10, 10a, 10b and the energy requirements of the system 10, 10a, 10b as compared to other gas separation systems.

In some instances, all or substantially all of the off-gas purged from the carbon dioxide recovery system 43, 43a, 43b may be utilized as the sweep stream 19, 19a, 19b. Preferably, only a portion of the off-gas of the carbon dioxide recovery system 43, 43a, 43b is utilized as the sweep stream 19, 19a, 19b. Generally, it is desirable to minimize the amount of sweep gas provided to the gas drying module 11, 11a, 11b and/or the membrane separation stages 1, 2, 1a, 2a, 3a, 1b. The portion of the off-gas that is not utilized as a sweep gas may be vented or otherwise discarded, further processed, recycled, and/or collected as a product.

In some instances, the dehydrated gas stream 18, 18a, 18b, is provided to the carbon dioxide recovery system 43, 43a, 43b, which may include a liquefaction unit or assembly that cools/condenses and liquefies the dehydrated gas stream 18, 18a, 18b (e.g., by using purified liquid carbon dioxide as a cooling medium), whereupon gaseous impurities are discharged and removed (via a stripper/reboiler 78, see FIG. 5) from the liquefied carbon dioxide while purified liquid carbon dioxide is withdrawn as a product (i.e., as the product stream 44, 44a, 44b). The carbon dioxide liquefaction unit may include at least one gas transport device 74 (e.g., two gas transport devices), at least one condenser 76 (e.g., two condensers) and a stripper/reboiler 78 coupled to the condenser 76 via suitable piping, as shown in FIG. 5. In some cases, the stripper/reboiler 78 may be provided in the form of a stripper, a boiler, or combinations thereof. Providing a dehydrated gas stream 18, 18a, 18b to the liquefaction unit or assembly of the carbon dioxide recovery system 43, 43a, 43b may facilitate and enable the performance of the carbon dioxide liquefaction unit, as the presence of moisture may cause the carbon dioxide liquefaction unit to freeze during operation and stop functioning. A portion of, substantially all, or all of the non-condensable gases and vapors may be recycled to fluid streams 8, 8a, 8b, 12, 12a, 12b, and/or 13, 13a, 13b, and/or a portion of, substantially all, or all of the non-condensable gases and vapors may be recycled to the membrane drying stage 11, 11a, 11b as a sweep gas (e.g., as the sweep stream 19, 19a, 19b). Referring still to FIG. 5, the carbon dioxide recovery system 43, 43a, 43b may optionally include a filter 80 (e.g., activated carbon filter) to adsorb one or more contaminants from the dehydrated gas stream 18, 18a, 18b including, but not limited to siloxanes, volatile organic compounds, $H_2S$, trace impurities, such as ketones and terpenes, and combinations thereof. The activated carbon filter may or may not be regenerative.

The hydrated sweep stream 21, 21a, 21b that exits the process gas drying module 11, 11a, 11b may be further processed, discarded, and/or collected as a product. In some instances, as illustrated in FIGS. 1-3, the hydrated sweep stream 21, 21a, 21b is recycled back, via an optional recycle line 27, 27a, 27b to the feed gas line 12, 12a, 12b. Alternatively, or additionally, the hydrated sweep stream 21, 21a, 21b may be recycled back, via an optional recycle line 25, 25a, 25b, to the gas source 20, 20a, 20b, for example, via a feed inlet 8, 8a, 8b configured upstream of the gas source 20, 20a, 20b. In some instances, the hydrated sweep stream 21, 21a, 21b is recycled back to the at least one gas transport device 22, 22a, 22b, as shown in FIG. 2. In some instances, recycling at least a portion of the hydrated sweep stream 21, 21a, 21b back to the feed inlet 8, 8a, 8b and/or the feed gas line 12, 12a, 12b and/or the at least one gas transport device 22, 22a, 22b may improve the recovery and/or purity of the product gases obtained from the system 10, 10a, 10b.

The dehydrated gas stream 18, 18a, 18b generated by the process gas drying module 11, 11a, 11b may be imparted with a concentration of water that is less than the concentration of water of the gas mixture of the gas source 20, 20a, 20b. The concentration of water in the dehydrated gas streams 18, 18a, 18b may be imparted with a single value or a range of values. In some instances, the concentration of water in the dehydrated gas streams 18, 18a, 18b may be imparted with a value of about 0 ppm by volume to about 200 ppm by volume. For example, the concentration of water in the dehydrated gas streams 18, 18a, 18b may be imparted with a value of about 0 ppm to about 200 ppm by volume, or about 0 ppm to about 175 ppm by volume, or about 0 ppm to about 150 ppm by volume, or about 0 ppm to about 125 ppm by volume, or about 0 ppm to about 100 ppm by volume, or about 0 ppm to about 75 ppm by volume, or about 0 ppm to about 50 ppm by volume, or about 0 ppm to about 25 ppm by volume, or about 0.1 ppm to about 10 ppm by volume, or about 0.01 ppm to about 1 ppm by volume. As an additional example, the concentration of water in the dehydrated gas streams 18, 18a, 18b may be imparted with a value of 0 ppm to 200 ppm by volume, or 0 ppm to 175 ppm by volume, or 0 ppm to 150 ppm by volume, or 0 ppm to 125 ppm by volume, or 0 ppm to 100 ppm by volume, or 0 ppm to 75 ppm by volume, or 0 ppm to 50 ppm by volume, or 0 ppm to 25 ppm by volume, or 0.1 ppm to 10 ppm by volume, or 0.01 ppm to 1 ppm by volume. It is to be understood that the concentration of water in the dehydrated gas streams 18, 18a, 18b may be imparted with a value, or a range of values, falling within any of the minimum or maximum values recited above.

As a further example, the concentration of water in the dehydrated gas streams 18, 18a, 18b may be imparted with a value of about 0 ppm by volume, or no more than about 0.01 ppm by volume, or no more than about 0.1 ppm by volume, or no more than about 1 ppm by volume, or no more than about 10 ppm by volume, or no more than about 25 ppm by volume, or no more than about 50 ppm by volume, or no more than about 75 ppm by volume, or no more than about 100 ppm by volume, or no more than about 125 ppm by volume, or no more than about 150 ppm by volume, or no more than about 175 ppm by volume, or no more than about 200 ppm by volume. As an additional example, the concentration of water in the dehydrated gas streams 18, 18a, 18b may be imparted with a value of 0 ppm by volume, or no more than 0.01 ppm by volume, or no more than 0.1 ppm by volume or no more than 1 ppm by volume, or no more than 10 ppm by volume, or no more than 25 ppm by volume, or no more than 50 ppm by volume, or no more than 75 ppm by volume, or no more than 100 ppm by volume, or no more than 125 ppm by volume, or no more than 150 ppm by volume, or no more than 175 ppm by volume, or no more than 200 ppm by volume. It is to be understood that the concentration of water in the dehydrated gas streams 18, 18a, 18b may be imparted with a value, or a range of values, falling within any of the minimum or maximum values recited above.

In some instances, the dehydrated gas stream 18, 18a, 18b generated by the process gas drying module 11, 11a, 11b may be imparted with a dewpoint. The dewpoint may be imparted with a value of -20°C to -75°C, although the dewpoint may be somewhat less or greater than these values. For example, the dewpoint may be imparted with a value of no more than about -20°C, or no more than about -25°C, or no more than about -30°C, or no more than about -35°C, or no more than about -40°C, or no more than about -45°C, or no more than about -50°C, or no more than about -55°C, or no more than about -60°C, or no more than about -65°C, or no more than about -70°C, or no more than about -75°C. As an additional example, the dewpoint may be imparted with a value of no more than -20°C, or no more than -25°C, or no more than -30°C, or no more than -35°C, or no more than -40°C, or no more than -45°C, or no more than -50°C, or no more than -55°C, or no more than -60°C, or no more than -65°C, or no more than -70°C, or no more than -75°C. It is to be understood that the dehydrated gas stream 18, 18a, 18b generated by the process gas drying module 11, 11a, 11b may be imparted with a dewpoint value, or a range of dewpoint values, falling within any minimum and maximum value recited herein.

In other instances, the dewpoint may be imparted with a value of no less than about -20°C, or no less than about -25°C, or no less than about -30°C, or no less than about -35°C, or no less than about -40°C, or no less than about -45°C, or no less than about -50°C, or no less than about -55°C, or no less than about -60°C, or no less than about -65°C, or no less than about -70°C, or no less than about -75°C. As an additional example, the dewpoint may be imparted with a value of no less than -20°C, or no less than -25°C, or no less than -30°C, or no less than -35°C, or no less than -40°C, or no less than -45°C, or no less than -50°C, or no less than -55°C, or no less than -60°C, or no less than -65°C, or no less than -70°C, or no less than -75°C. It is to be understood that the dehydrated gas stream 18, 18a, 18b generated by the process gas drying module 11, 11a, 11b may be imparted with a dewpoint value, or a range of dewpoint values, falling within any minimum and maximum value recited herein.

In certain instances, the dehydrated gas stream 18, 18a, 18b may be imparted with a pressure. The pressure of the dehydrated gas stream 18, 18a, 18b may be imparted with a value of 1 bar to 20 bar, although the pressure of the dehydrated gas stream 18, 18a, 18b may be somewhat less or greater than these values. For example, the pressure may be imparted with a value of at least 2 bar, or at least 3 bar, or at least 4 bar, or at least 5 bar, or at least 6 bar, or at least 7 bar, or at least 8 bar, or at least 9 bar, or at least 10 bar, or at least 11 bar, or at least 12 bar, or at least 13 bar, or at least 14 bar, or at least 15 bar, or at least 16 bar, or at least 17 bar, or at least 18 bar, or at least 19 bar, or at least 20 bar. As an additional example, the pressure of the dehydrated gas stream 18, 18a, 18b may be imparted with a value of at least about 2 bar, or at least about 3 bar, or at least about 4 bar, or at least about 5 bar, or at least about 6 bar, or at least about 7 bar, or at least about 8 bar, or at least about 9 bar, or at least about 10 bar, or at least about 11 bar, or at least about 12 bar, or at least about 13 bar, or at least about 14 bar, or at least about 15 bar, or at least about 16 bar, or at least about 17 bar, or at least about 18 bar, or at least about 19 bar, or at least about 20 bar. It is to be understood that the pressure of the dehydrated gas stream 18, 18a, 18b may be imparted with a value, or a range of values, falling within any minimum and maximum value recited herein.

Generally, the target dewpoint and/or target pressure of the dehydrated gas stream 18, 18a, 18b may be selected based at least in part on condensing conditions downstream of the gas drying module (e.g., condensing temperatures and pressures of $CO_2$ in a downstream $CO_2$ liquefaction unit). For example, the target dewpoint of the dehydrated gas stream 18, 18a, 18b may be selected to be lower than the condensing dewpoint.

By providing a dehydrated gas stream 18, 18a, 18b from the process gas drying module 11, 11a, 11b, performance issues for the system 10, 10a, 10b can be reduced. For instance, if a stripper/reboiler is provided downstream of the process gas drying module 11, 11a, 11b, the dewpoint of the gas provided to the reboiler is selected to avoid freezing of water in the pipework of the stripper/reboiler during operation.

Referring again to FIGS. 1-3, the gas separation membrane modules of the membrane separation stages 1, 2, 1a, 2a, 3a, 1b are designed to separate a gas mixture into a retentate stream 14, 14a, 14b, 23, 23a, 32a and a permeate stream 15, 15a, 15b, 24, 24a, 34a. The retentate stream 14, 14a, 14b, 23, 23a, 32a includes gas components that do not pass through the membrane, and the permeate stream 15, 15a, 15b, 24, 24a, 34a includes gas components that pass through the membrane. In instances in which only a single membrane separation stage is provided, such as in the system 10b shown in FIG. 3, the retentate stream 14b and/or the permeate stream 15b may provide the product gas(es) generated by the system 10b. In certain instances, at least a portion of, substantially all, or all of the retentate stream 14, 14a, 14b, 23, 23a, 32a and/or the permeate stream 15, 15a, 15b, 24, 24a, 34a may be collected, stored, vented, recycled to the system 10, 10a, 10b, and/or further processed.

Referring to FIGS. 1 and 2, the first retentate stream 14, 14a is connected to a feed side of the second membrane separation stage 2, 2a. In some instances, the first retentate stream 14, 14a is provided to the second membrane separation stage 2, 2a. The second membrane separation stage 2, 2a includes a gas separation membrane that separates the first retentate stream 14, 14a into a second retentate stream 23, 23a and a second permeate stream 24, 24a. The second retentate stream 23, 23a may be withdrawn as a product, further processed, recycled back to the system 10, 10a, or discarded. For example, the second retentate stream 23, 23a may be provided from the system 10, 10a as a product gas (e.g., a methane-rich and carbon dioxide-lean product gas). In some instances, the second permeate stream 24, 24a is recycled back to the feed gas line 12, 12a via the recycle line 27, 27a. Alternatively, or additionally, the second permeate stream 24, 24a may be recycled via the optional recycle line 25, 25a back to the gas source 20, 20a, for example, to a feed inlet 8, 8a configured upstream of the gas source 20, 20a. Alternatively, the second permeate stream 24, 24a may be further processed, or discarded. The second permeate stream 24, 24a may contain a greater concentration of carbon dioxide than the gas mixture of the gas source 20, 20a and/or the second retentate stream 23, 23a, which may be primarily methane. In some cases, depending on the selectivity of the gas separation membrane(s) provided within the second membrane separation stage 2, 2a and other process factors, the second permeate stream 24, 24a may also contain some methane, or the second permeate stream 24, 24a may be substantially free of methane (e.g., methane-lean and/or carbon dioxide-rich). In some instances, the second permeate stream 24, 24a may comprise methane, carbon dioxide, and water.

In some instances, the first permeate stream 15, 15a, 15b may be provided directly to the process gas drying module 11, 11a, 11b. In other instances, as shown in FIGS. 1-3, the first permeate stream 15, 15a, 15b may undergo further processing before being provided to the process gas drying module 11, 11a, 11b. For example, the first permeate stream 15, 15a, 15b may be provided to a suction side of an optional second gas transport device 22a that is configured or designed to adjust (e.g., increase) the pressure of the first permeate stream 15, 15a, 15b, producing a second gas transport device discharge stream 16, 16a, 16b. The optional second gas transport device 22a may comprise a mechanical device that increases the pressure of the first permeate stream 15, 15a, 15b and may be provided in the form of, for example, a compressor or a blower. In some instances, the optional second gas transport device 22a is configured or designed to compress the first permeate stream 15, 15a, 15b. The compressed first permeate stream 15, 15a, 15b may be imparted with a second pressure. The second pressure may be imparted with a value of 1.5 bar (150 kPa) to 100 bar (10000 kPa), or more. For example, the second pressure may be imparted with a value of at least about 5 bar (500 kPa) to at least about 40 bar (4000 kPa), or at least about 5 bar (500 kPa) to at least about 35 bar (3500 kPa), or at least about 5 bar (500 kPa) to at least about 25 bar (2500 kPa). As an additional example, the second pressure may be imparted with a value of at least 5 bar (500 kPa) to at least 40 bar (4000 kPa), or at least 5 bar (500 kPa) to at least 35 bar (3500 kPa), or at least 5 bar (500 kPa) to at least 25 bar (2500 kPa). It is to be understood that the second pressure may be imparted with a value, or a range of values, falling within any minimum and maximum value recited herein.

In some instances, the second gas transport device discharge stream 16, 16a, 16b is fed to an optional third gas transport device 22b, which is configured or designed to further adjust (e.g., increase) the pressure of the second gas transport device discharge stream 16, 16a, 16b to a third pressure, producing a third gas transport device discharge stream 17, 17a, 17b. The third pressure may be imparted with a value of about 1.5 bar (150 kPa) to about 100 bar (10000 kPa), or more. For example, the third pressure may be imparted with a value of at least about 5 bar (500 kPa) to at least about 40 bar (4000 kPa), or at least about 5 bar (500 kPa) to at least about 35 bar (3500 kPa), or at least about 5 bar (500 kPa) to at least about 25 bar (2500 kPa). As an additional example, the third pressure may be imparted with a value of 1.5 bar (150 kPa) to about 100 bar (10000 kPa). In such instances, the third pressure may be imparted with a value of at least 5 bar (500 kPa) to at least 40 bar (4000 kPa), or at least 5 bar (500 kPa) to at least 35 bar (3500 kPa), or at least 5 bar (500 kPa) to at least 25 bar (2500 kPa). It is to be understood that the third pressure may be imparted with a value, or a range of values, falling within any minimum and maximum value recited herein. The second gas transport device discharge stream 16, 16a, 16b may optionally be cooled before being fed into the optional third gas transport device 22b. The third gas transport device discharge stream 17, 17a, 17b may optionally be subject to cooling and/or the removal of impurities (e.g., removal of water).

In some instances, the third gas transport device discharge stream 17, 17a, 17b is fed into a process gas drying module 11, 11a, 11b. The third gas transport device discharge stream 17, 17a, 17b may optionally be filtered for impurities before flowing into the process gas drying module 11, 11a, 11b. For example, the filter (e.g., including an activated carbon media) may be configured or designed to adsorb one or more contaminants from the third gas transport device discharge stream 17, 17a, 17b including, but not limited to siloxanes, volatile organic compounds, $H_2S$, trace impurities, such as ketones and terpenes, and combinations thereof. In some cases, an activated carbon filter may be positioned and located in the third gas transport device discharge stream 17 upstream of the process gas drying module 11. The activated carbon filter may or may not be regenerative.

In some instances, the gas separation membrane(s) provided in the second membrane separation stage 2, 2a are the same membrane(s) as those used in the first membrane separation stage 1, 1a. Alternatively, the gas separation membrane(s) provided in the second membrane separation stage 2, 2a may be different than the membrane(s) provided in the first membrane separation stage 1, 1a. In addition, in some instances, the gas separation membrane of the second membrane separation stage 2, 2a may comprise a selectivity that is the same or different than the selectivity of the first membrane separation stage 1, 1a. In yet other instances, the gas separation membrane(s) provided in the third membrane separation stage 3a may be the same as, or different than, the gas separation membrane(s) provided in each of the first and second membrane separation stages 1, 1a, 2, 2a.

FIGS. 1-3 illustrate the system 10, 10a, 10b used in conjunction with an example process control system including a controller 36, 36a, 36b according to some instances of the present disclosure. The controller 36, 36a, 36b may be configured or designed to control the operation of the system 10, 10a, 10b. For example, the controller 36, 36a, 36b may assist in starting the process, stopping the process, and adjusting process parameters to change the process performance. In some instances, the controller 36, 36a, 36b may be configured or designed to control the concentration of a selected component in a process stream, such as the second retentate stream 23, 23a, the second permeate stream 24, 24a, and/or the product stream 44, 44a, 44b, and/or to monitor and adjust system parameters to control energy consumption to reduce operational costs.

In some instances, the controller 36, 36a, 36b may adjust or control a multitude of process parameters to maintain a product gas purity. In some non-limiting examples, the product gas in the second retentate stream 23, 23a comprises methane, namely a majority of methane. For example, the purity of the product gas in the second retentate stream 23, 23a may be controlled using the control system to be at least 80%, at least 85%, at least 90%, at least 91%, at least 92%, at least 93%, at least 94%, at least 95%, at least 96%, at least 97%, at least 98%, at least 99%, at least 99.5%, or at least 99.9% methane. In some instances, the purity of the product gas in the second retentate stream 23, 23a may be controlled using the control system to be at least about 80%, at least about 85%, at least about 90%, at least about 91%, at least about 92%, at least about 93%, at least about 94%, at least about 95%, at least about 96%, at least about 97%, at least about 98%, at least about 99%, at least about 99.5%, or at least about 99.9% methane.

In some non-limiting examples, the product gas in the first permeate stream 15, 15a, 15b comprises mostly carbon dioxide. For example, the product gas purity of the first permeate stream 15, 15a, 15b may be controlled using the control system to be at least 80%, or at least 85%, or at least 90%, or at least 91%, or at least 92%, or at least 93%, or at least 94%, or at least 95%, or at least 96%, or at least 97%, or at least 98%, or at least 99%, or at least 99.5%, or at least 99.9% carbon dioxide. In some instances, the product gas purity of the first permeate stream 15, 15a, 15b may be controlled using the control system to be at least about 80%, or at least about 85%, or at least about 90%, or at least about 91%, or at least about 92%, or at least about 93%, or at least about 94%, or at least about 95%, or at least about 96%, or at least about 97%, or at least about 98%, or at least about 99%, or at least about 99.5%, or at least about 99.9% carbon dioxide.

In some non-limiting examples, the product stream 44, 44a, 44b comprises mostly carbon dioxide. For example, the purity of the product stream 44, 44a, 44b may be controlled using the control system to be at least 95%, or at least 96%, or at least 97%, or at least 98%, or at least 99%, or at least 99.5%, or at least 99.9% carbon dioxide. In some instances, the purity of product stream 44, 44a, 44b may be controlled using the control system to be at least about 80%, or at least about 85%, or at least about 90%, or at least about 91%, or at least about 92%, or at least about 93%, or at least about 94%, or at least about 95%, or at least about 96%, or at least about 97%, or at least about 98%, or at least about 99%, or at least about 99.5%, or at least about 99.9% carbon dioxide.

Referring again to FIGS. 1-3, in some instances, the process control system includes a controller 36, 36a, 36b, one or more process measuring devices (e.g., 26a-26n), one or more process control devices (e.g., the first gas transport device 22, the optional second gas transport device 22a, the optional third gas transport device 22b, one or more valves 28a-28i, and one or more temperature control devices 30a-30f), and suitable connections that allow process information acquired by the one or more measuring devices to be transferred to the controller 36, 36a, 36b, and output information from the controller 36, 36a, 36b to be transferred to the one or more process control devices to perform a process control action. Example process control actions may include using the process control devices to alter one or more of a pressure, a flow rate, a dewpoint, and/or a temperature value of a process stream based on one or more measured values from the process measuring devices.

Suitable connections may include transmitters that allow process signals, such as electrical signals or gas pressure signals (e.g., air, nitrogen, etc.), to be transmitted between the controller 36 and the measuring devices (e.g., 26a-26l) and the process control devices (e.g., 22, 22a, 22b, 28a-28i, and 30a-30f). The electrical signals may be transferred via a wired connection or through a wireless network connection. Other hardware elements may be included in the process control system, for example, transducers, analog-to-digital (A/D) converters, and digital-to-analog (D/A) converters that allow process information to be recognizable in computer form, and computer commands accessible to the process. For visual clarity, the connections between the controller 36, 36a, 36b, the one or more measuring devices, and the one or more process control devices have been omitted from FIGS. 1-3.

In some instances, the system 10, 10a, 10b may include one or more process measuring devices (e.g., 26a-26n). For example, the system 10, 10a, 10b may include one or more of an inlet gas line measuring device 26a located in the feed gas line 12, 12a, 12b, a feed gas line measuring device 26b located in the gas transport discharge line or stream 13, 13a, 13b, a first permeate measuring device 26c located in the first permeate stream 15, 15a, 15b, a first retentate measuring device 26d located in the first retentate stream 14, 14a, 14b, a measuring device 26e located in the second gas transport device discharge stream 16, 16a, 16b, a measuring device 26f located in the third gas transport device discharge stream 17, 17a, 17b, the measuring device 26g located in the dehydrated gas stream 18, 18a, 18b, second permeate measuring device 26h located in the second permeate stream 24, 24a, a second retentate measuring device 26i located in the second retentate stream 23, 23a, a third retentate measuring device 26n located in the third retentate stream 32a, a sweep stream measuring device 26l located in the sweep stream 19, 19a, 19b, a hydrated sweep stream measuring device 26j located in the hydrated sweep stream 21, 21a, 21b, and/or a $CO_2$-product stream measuring device 26k located in the product stream 44, 44a, 44b. Each of the process measuring devices 26a-26l may be configured or designed to measure a process parameter, or multiple process parameters, such as pressure, temperature, flow, composition, viscosity, humidity, moisture, dewpoint, or density.

In some instances, the one or more measuring devices 26a-26n includes a pressure measuring device. Suitable pressure measuring devices include, but are not limited to, pressure transducers, diaphragm bellows, Bourdon tubes, strain gauges, piezoelectric sensors, ionization gauges, and combinations thereof.

In some instances, the one or more measuring devices 26a-26n includes a flow measuring device. Suitable flow measuring devices include, but are not limited to, pitot tubes, orifice flow meters, turbine flow meters, electromagnetic field flow meters, neutron bombardment flow meters, ultrasound flow meters, hot-wire anemometry flow meters, and angular momentum flow meters, Coriolis mass flow meters, and combinations thereof.

In some instances, the one or more measuring devices 26a-26n includes a temperature measuring device. Suitable temperature measuring devices include, but are not limited to, thermocouples, thermistors (e.g., a resistance sensor), oscillating quartz crystal thermometers, radiation pyrometers, and combinations thereof.

In some instances, the one or more measuring devices 26a-26n includes a density measuring device. Suitable density measuring devices include, but are not limited to, vibrating tube densometers, X-ray densometers, differential pressure densometers, and combinations thereof.

In some instances, the one or more measuring devices 26a-26n includes a viscosity measuring device. Suitable viscosity measuring devices include, but are not limited to, capillary viscometers, vibrating ball viscometers, and combinations thereof.

In some instances, the one or more measuring devices 26a-26n includes a humidity measuring device. Suitable humidity measuring devices include hygrometers.

In some instances, the one or more measuring devices 26a-26n includes a dewpoint measuring device. Suitable dewpoint measuring devices include those available from Vaisala (Finland) and those available from Michell Instruments (e.g., QMA analyzers).

In some instances, the one or more measuring devices 26a-26n includes a composition measuring device. Suitable composition measuring devices include, but are not limited to, potentiometry sensors, moisture content sensors (hygrometry or psychrometry), gas chromatography devices, refractive index devices, ultrasound devices, spectroscopy systems (e.g., UV, visible, IR, Mossbauer, Raman, atomic-emission devices, X-ray devices, electron, ion, nuclear magnetic resonance devices), polarography devices, conductimetry devices, mass spectrometry systems, differential thermal analysis devices, thermogravimetric analysis systems, and combinations thereof.

Referring still to FIGS. 1-3, the system 10, 10a, 10b includes one or more process control devices, such as valves (e.g., 28a-28i), temperature control devices (e.g., 30a-30f), the first gas transport device 22, the optional second gas transport device 22a, and the optional third gas transport device 22b.

In some instances, the system 10, 10a, 10b includes one or more valves 28a-28i that are adjustable between a fully open position and a fully closed position and are used to regulate the pressure of the process streams. For example, the system 10, 10a, 10b may include a first permeate valve 28a located in the first permeate stream 15, 15a, 15b, a first retentate valve 28b located in the first retentate stream 14, 14a, 14b, a valve 28c located in the second gas transport device discharge stream 16, 16a, 16b, a valve 28d located in the third gas transport device discharge stream 17, 17a, 17b, a sweep stream valve 28e located in the sweep stream 19, 19a, 19b, a sweep stream valve 28i located in the third retentate stream 32a, a second permeate valve 28f located in the second permeate stream 24, 24a, a second retentate valve 28g located in the second retentate stream 23, 23a, and/or a recycle stream valve 28h provided in the hydrated sweep stream 21, 21a, 21b (or, alternatively, in the recycle lines 25, 25a, 25b, 27, 27a, 27b). Example valves for use in system 10, 10a, 10b include, without limitation, motor-driven valves, pneumatic valves, and manually adjustable valves.

In certain instances, the controller 36, 36a, 36b may control or adjust one or more of the valves 28a-28i in response to measured values provided to the controller 36, 36a, 36b by the one or more process measuring devices (e.g., 26, 26a-26n). For example, the controller 36, 36a, 36b may adjust one or more of the valves 28a-28i (e.g., 28e) such that additional sweep gas is provided to the permeate side of the membrane(s) of the process gas drying module 11, 11a, 11b, when the purity of a product gas (e.g., dehydrated gas stream 18, 18a, 18b or product stream 44, 44a, 44b, as measured by the process measuring devices 26g and/or 26k) drops below a first threshold value or if the moisture content of a product gas (e.g., dehydrated gas stream 18, 18a, 18b or product stream 44, 44a, 44b, as measured by the process measuring devices 26g and/or 26k) rises above a second threshold value. As an additional example, the controller 36, 36a, 36b may adjust the valves (e.g., sweep stream valve 28e, 28i) such that less sweep gas is provided to the permeate side of the membrane(s) of the process gas drying module 11, 11a, 11b when the purity of a product gas (e.g., dehydrated gas stream 18, 18a, 18b or product stream 44, 44a, 44b, as measured by the process measuring devices 26g and/or 26k) is above a third threshold value. As yet another example, the controller 36, 36a, 36b may adjust the valves (e.g., sweep stream valve 28e, 28i) such that less sweep gas is provided to the permeate side of the membrane(s) of the process gas drying module 11, 11a, 11b when the obtained recovery of a product gas (e.g., dehydrated gas stream 18, 18a, 18b or product stream 44, 44a, 44b, as measured by the process measuring devices 26g and/or 26k) drops below a fourth threshold value. As would be understood, these examples are non-limiting, and additional determinations may be made by the controller 36, 36a, 36b with regard to opening, closing, and adjusting any of the valves 28a-28i.

The system 10 may include one or more temperature control devices (e.g., 30a-30f) that may be used to adjust the temperature (e.g., heat or cool) of the process streams. For example, the system 10, 10a, 10b may include one or more of a temperature control device 30a located in the gas transport discharge line 13, 13a, 13b, a temperature control device 30b located in the first retentate stream 14, 14a, 14b, a temperature control device 30c located in the first permeate stream 15, 15a, 15b, a temperature control device 30d located in the second gas transport device discharge stream 16, 16a, 16b, a temperature control device 30e configured in the third gas transport device discharge stream 17, 17a, 17b, a temperature control device 30f configured in the sweep stream 19, 19a, 19b. Suitable temperature control devices 30a-30f include devices that heat or cool the process stream, such as heat exchangers or electric heaters. In some instances, the system 10, 10a, 10b includes a temperature control device 30f configured in the sweep stream 19, 19a, 19b and the temperature control device 30f heats the sweep stream 19, 19a, 19b. For example, if the sweep stream originates as a high-pressure stream and the pressure is reduced to a suitable, lower pressure, the sweep stream will cool, which may result in vapor condensation or even freezing of the condensate. Vapor condensation and frozen condensate may cause the system to shut down or even damage the system. Heating the sweep stream 19, 19a, 19b using the temperature control device 30f may avoid condensation and freezing.

The controller 36, 36a, 36b includes a processor 45, 45a, 45b, and a memory 48, 48a, 48b that includes software 50, 50a, 50b and data 52, 52a, 52b and is designed for storage and retrieval of information to be processed by the processor 45, 45a, 45b. The processor 45, 45a, 45b includes an input 54, 54a, 54b that is configured or designed to receive process signals from the one or more of the measuring devices (26a-26n) and the one or more of the process control devices (e.g., 22, 22a, 22b, 28a-28i, and 30a-30f) via the input 54, 54a, 54b. The controller 36, 36a, 36b may operate autonomously or semi-autonomously, or it may read executable software instructions from the memory 48, 48a, 48b or a computer-readable medium (e.g., a hard drive, a CD-ROM, flash memory), or may receive instructions via the input 54, 54a, 54b from a user, or another source logically connected to a computer or device, such as another networked computer or server. For example, the server may be used to control the system 10, 10a, 10b via the controller 36, 36a, 36b on-site or remotely.

The processor 45, 45a, 45b may process the process signals to generate an output 56, 56a, 56b, which may take the form of a process control action. Example process control actions may include sending signals to the one or more process control devices (e.g., 22, 22a, 22b, 28a-28i, and 30a-30f) to effectuate a change in one or more process parameters (e.g., pressure, flow rate, composition, membrane surface area, and/or temperature) of one or more process streams in system 10, 10a, 10b.

In some instances, the controller 36, 36a, 36b includes programming to adjust the process parameters in the system 10, 10a, 10b using the one or more process control devices (e.g., 22, 22a, 22b, 28a-28i, and 30a-30f) in response to measured values obtained from the one or more measuring devices (e.g., 26a-26n) to maintain a selected set-point in the dehydrated gas stream 18, 18a, 18b output (i.e., the retentate) of the process gas drying module 11, 11a, 11b, such as a selected dewpoint.

For example, the controller 36, 36a, 36b may be programmed to monitor one or more process parameters (e.g., dewpoint) in the dehydrated gas stream 18, 18a, 18b using the measuring device 26g located in the dehydrated gas stream 18, 18a, 18b. Once a change in the process parameter is detected or a user-specified threshold has been reached, the pressure of the sweep stream 19, 19a, 19b may be adjusted via the sweep stream valve 28e (which is located in the sweep stream 19, 19a, 19b) to maintain the selected set-point. The selected set-point in the dehydrated gas stream 18, 18a, 18b may thus be maintained by adjusting the pressure in the sweep stream 19, 19a, 19b using the sweep stream valve 28e. Alternatively, or additionally, the measuring device 26f may be used to monitor one or more process parameters in the third gas transport device discharge stream 17, 17a, 17b.

In some instances, the controller 36, 36a, 36b is in electrical communication with a measuring device 26g configured or designed to measure a parameter of the dehydrated gas stream 18, 18a, 18b and a valve 28e located in the sweep stream 19, 19a, 19b, where the controller 36, 36a, 36b is configured or designed to maintain or adjust the position of the valve 28e located in the sweep stream 19, 19a, 19b in response to the measured parameter.

In some instances, the controller 36, 36a, 36b includes programming to adjust the process parameters in the system 10, 10a, 10b using the one or more process control devices (e.g., 22, 22a, 22b, 28a-28i, and 30a-30f) in response to measured values obtained from the one or more measuring devices (e.g., 26a-26n) to maintain a selected set-point in the second retentate stream 23, 23a such as a desired pressure, a desired component composition, and/or a desired flow rate. For example, the controller 36, 36a may be programmed to monitor one or more process parameters in the second retentate stream 23, 23a (e.g., pressure, etc.) using the second retentate measuring device 26i. Once a change in the process parameter is detected or a user-specified threshold has been reached, the pressure of the second retentate stream 23, 23a may be adjusted using the second retentate valve 28g to maintain the selected set-point. Alternatively, or additionally, the first retentate stream 14, 14a measuring device 26d may be used to monitor one or more process parameters in the first retentate stream 14, 14a, where the selected set-point in the second retentate stream 23, 23a is maintained by adjusting the pressure in the first retentate stream 14, 14a using the first retentate valve 28b.

In some instances, the controller 36, 36a, 36b includes programming to adjust process parameters in the system 10, 10a, 10b using the one or more process control devices (e.g., 22, 22a, 22b, 28a-28i, and 30a-30f) in response to measured values obtained from the one or more measuring devices (e.g., 26a-26n) to maintain a selected set-point in the second gas transport device discharge stream 16, 16a, 16b, such as a desired pressure, a desired component composition, and/or a desired flow rate.

In some instances, the controller 36, 36a, 36b includes programming to adjust process parameters in the system 10, 10a, 10b using the one or more process control devices (e.g., 22, 22a, 22b, 28a-28i, and 30a-30f) in response to measured values obtained from the one or more measuring devices (e.g., 26a-26n) to maintain a selected set-point in the third gas transport device discharge stream 17, 17a, 17b, such as a desired pressure, a desired component composition, and/or a desired flow rate.

In some instances, the controller 36, 36a, 36b includes programming to adjust process parameters in the system 10, 10a, 10b using the one or more process control devices (e.g., 22, 22a, 22b, 28a-28i, and 30a-30f) in response to measured values obtained from the one or more measuring devices (e.g., 26a-26n) to maintain a selected set-point in the first permeate stream 15, 15a, 15b, such as a desired pressure, a desired component composition, and/or a desired flow rate.

For example, the controller 36, 36a, 36b may be programmed to acquire one or more process parameters in the first permeate stream 15, 15a, 15b using the first permeate measuring device 26c. Once a change is detected or a user-specified threshold has been reached, the pressure of the first permeate stream 15, 15a, 15b may be adjusted using the first permeate valve 28a to maintain the selected set-point. In one non-limiting example, the composition (e.g., methane concentration) of the first permeate stream 15, 15a, 15b is measured and controlled to maintain the selected set-point by adjusting the pressure in the gas transport discharge stream 13, 13a, 13b using the first gas transport device 22.

In some instances, the controller 36, 36a includes programming to adjust process parameters in the system 10, 10a using the one or more process control devices (e.g., 22, 22a, 22b, 28a-28i, and 30a-30f) in response to measured values obtained from the one or more measuring devices (e.g., 26a-26n) to maintain a selected set-point in the second permeate stream 24, 24a, such as a desired pressure, a desired component composition, and/or a desired flow rate.

For example, the controller 36, 36a may be programmed to acquire one or more process parameters in the second permeate stream 24, 24a using the second permeate measuring device 26h. Once a change is detected or a user-specified threshold has been reached, the pressure of the second permeate stream 24, 24a may be adjusted using the second permeate valve 28f to obtain the selected set-point. In one non-limiting example, the pressure of the second permeate stream 24, 24a is measured and adjusted to be the same or substantially the same as the pressure of the feed gas line 12, 12a, which may be measured using the inlet gas line measuring device 26a.

Additionally, or alternatively, the controller 36, 36a, 36b may be programmed to acquire one or more process parameters in the first retentate stream 14, 14a, 14b using the first retentate measuring device 26d. Once a change is detected or a user-specified threshold has been reached, the pressure of the first retentate stream 14, 14a, 14b may be adjusted using the first retentate valve 28b.

In some instances, the controller 36, 36a, 36b includes programming to adjust process parameters in the system 10, 10a, 10b using the one or more process control devices (e.g., 22, 22a, 22b, 28a-28i, and 30a-30f) in response to measured values obtained from the one or more measuring devices (e.g., 26a-26n) to maintain a selected set-point in the feed gas line 12, 12a, 12b and/or the gas transport discharge line 13, 13a, 13b, such as a desired pressure, a desired component composition, and/or a desired flow rate.

In some instances, the controller 36, 36a, 36b includes programming to adjust process parameters in the system 10, 10a, 10b using the one or more process control devices (e.g., 22, 22a, 22b, 28a-28i, and 30a-30f) in response to measured values obtained from the one or more measuring devices (e.g., 26a-26n) to maintain a selected temperature set-point for the first membrane separation stage 1, 1a, 1b, the second membrane separation stage 2, 2a, and/or the third membrane separation stage 3a.

For example, the controller 36, 36a, 36b may be programmed to acquire one or more process parameters in the system 10, 10a, 10b using one or more of the process measuring devices (e.g., 26a-26n) and adjust the operation temperature of the first membrane separation stage 1, 1a, 1b, the second membrane separation stage 2, 2a, and/or the third membrane separation stage 3a, using the temperature control device 30a located in the gas transport discharge stream 13, 13a, 13b, the temperature control device 30b located in the first retentate stream 14, 14a, 14b, and/or the temperature control device 30c located in the first permeate stream 15, 15a, 15b to obtain a selected temperature set-point. The temperature of the first membrane separation stage 1, 1a, 1b, the second membrane separation stage 2, 2a, and/or the third membrane separation stage 3a, may be controlled to be the same or different.

In some instances, a pretreatment unit (not shown) may be configured in the feed gas line 12, 12a, 12b and may be optionally used to remove contaminants from the gas mixture. For example, the pretreatment unit may be configured or designed to perform filtration (e.g., by activated carbon), adsorption, absorption, or condensation to remove one or more contaminants from the gas mixture including, but not limited to siloxanes, volatile organic compounds, $H_2S$, water, and combinations thereof.

Referring now to FIG. 4, one or more of the membrane separation stages 1, 2, 1a, 2a, 3a, 1b and/or one or more of the gas drying modules 11, 11a, 11b provided in the system 10, 10a, 10b may include a plurality of gas separation membranes 60 configured therein. The plurality of gas separation membranes 60 may be configured in parallel or in series.

In some instances, one or more of the membrane separation stages 1, 2, 1a, 2a, 3a, 1b may be configured with a first gas separation membrane unit 60a, a second gas separation membrane unit 60b, and (optionally, as indicated by break lines 61) one or more additional gas separation membrane units 60n in fluid communication with the incoming stream (e.g., 13, 13a, 13b, 14, 14a, 14b, 16a). The incoming stream may then be split into multiple inlet streams to feed into the plurality of gas separation membranes 60. For example, the incoming stream may be split into a first interior membrane stage inlet stream 62a, a second interior membrane stage inlet stream 62b, and optionally one or more additional interior membrane stage inlet streams 62n. Each of the interior membrane stage inlet streams 62a, 62b, and 62n may be configured with a valve 64a, 64b, and 64n to regulate the flow rate to the respective gas separation membrane unit.

In some instances, one or more of the gas drying modules 11, 11a, 11b may be configured with a first gas drying membrane unit 60a, a second gas drying membrane unit 60b, and (optionally, as indicated by break lines 61) one or more additional gas drying membrane units 60n in fluid communication with the incoming stream (e.g., 17, 17a, 17b). The incoming stream may then be split into multiple inlet streams to feed into the plurality of gas separation membranes 60. For example, the incoming stream may be split into a first interior membrane stage inlet stream 62a, a second interior membrane stage inlet stream 62b, and optionally one or more additional interior membrane stage inlet streams 62n. Each of the interior membrane stage inlet streams 62a, 62b, and 62n may be configured with a valve 64a, 64b, and 64n to regulate the flow rate to the respective gas separation membrane unit.

In some instances, each of the gas separation membrane units 60a, 60b, and 60n may include a gas separation membrane that separates the incoming gas mixture into interior membrane stage permeate streams 66a, 66b, 66n and retentate stream 68a, 68b, 68n, respectively. The permeate streams 66a, 66b, 66n may be combined to form a pooled permeate stream (e.g., 15, 15a, 15b, 24, 24a, 24b, 34a) that exits the one or more membrane separation stages 1, 2, 1a, 2a, 3a, 1b. In some instances, permeate control valves 70a, 70b, 70n may be configured in the permeate streams 66a, 66b, 66n to regulate the gas flow rate to the pooled permeate stream (e.g., the permeate control valves 70a, 70b, 70n may regulate the gas flow rate of the permeate streams 66a, 66b, 66n that provide the pooled retentate stream). In an alternative arrangement, the permeate control valves 70a, 70b, 70n may be combined into a single valve positioned in the pooled permeate stream (e.g., 15, 15a, 15b, 24, 24a, 24b, 34a). Similarly, each of the retentate streams 68a, 68b, 68n may be combined to form a pooled retentate stream (e.g., 14, 14a, 14b, 23, 23a, 32a) that exits the one or more membrane separation stages 1, 2, 1a, 2a, 3a, 1b. Retentate control valves 72a, 72b, 72n may be configured or designed to regulate the gas flow rate of the pooled retentate stream (e.g., the retentate control valves 72a, 72b, 72n may regulate the gas flow rate of the retentate streams 68a, 68b, 68n that provide the pooled retentate stream). In an alternative arrangement, the retentate control valves 72a, 72b, 72n may be combined into a single valve positioned in the pooled retentate stream (e.g., 14, 14a, 14b, 23, 23a, 32a).

In some instances, each of the gas drying membrane units 60a, 60b, and 60n includes a gas drying membrane that generates interior membrane stage hydrated permeate streams 66a, 66b, 66n (containing sweep gas plus permeating components) and dried retentate streams 68a, 68b, 68n, respectively. The permeate streams 66a, 66b, 66n may be combined to form a pooled permeate stream (e.g., 21, 21a, 21b) that exits the one or more gas drying modules 11, 11a, 11b. In some instances, permeate control valves 70a, 70b, 70n may be configured in the permeate streams 66a, 66b, 66n to regulate the gas flow rate to the pooled permeate stream. In an alternative arrangement, the permeate control valves 70a, 70b, 70n may be combined into a single valve positioned in the pooled permeate stream (e.g., 21, 21a, 21b). Similarly, each of the retentate streams 68a, 68b, 68n may be combined to form a pooled retentate stream (e.g., 18, 18a, 18b) that exits the one or more gas drying modules 11, 11a, 11b. Retentate control valves 72a, 72b, 72n may be configured or designed to regulate the gas flow rate of the pooled retentate stream. In an alternative arrangement, the retentate control valves 72a, 72b, 72n may be combined into a single valve positioned in the pooled retentate stream (e.g., 18, 18a, 18b). In some instances, off-gas purged from a carbon dioxide recovery system 43, 43a, 43b may be utilized as a sweep stream 19, 19a, 19b (see FIGS. 1-3). The sweep stream 19, 19a, 19b may be split into multiple sweep streams that may be provided to the permeate sides of the plurality of the membranes 60. For example, the sweep stream 19, 19a, 19b may be split into a first interior membrane stage sweep stream, a second interior membrane stage sweep stream, and optionally one or more additional interior membrane stage sweep streams. It is to be understood that the sweep stream 19, 19a, 19b may be provided to the permeate sides of the membranes 60 in other manners than explicitly described herein.

In some instances, the controller 36, 36a, 36b is placed in electrical communication with the first interior control valve 64a, the second interior control valve 64b, the one or more additional interior control valve 64n, the permeate control valves 70a, 70b, 70n, and the retentate control valves 72a, 72b, 72n.

In some instances, the controller 36, 36a, 36b includes programming to adjust the total surface area (e.g., increase or decrease) of the one or more membrane separation stages 1, 2, 1a, 2a, 3a, 1b and/or the one or more gas drying modules 11, 11a, 11b using the one or more interior control devices (e.g., 64a, 64b, 64n, 70a, 70b, 70n, 72a, 72b, and 72n). The total surface area of the one or more membrane separation stages 1, 2, 1a, 2a, 3a, 1b and/or the one or more gas drying modules 11, 11a, 11b may be adjusted manually by closing and opening the one or more interior control devices, for example, by a user. Alternatively or additionally, the total surface area of the one or more membrane separation stages 1, 2, 1a, 2a, 3a, 1b and/or the one or more gas drying modules 11, 11a, 11b may be adjusted in response to measured values obtained from the one or more measuring devices (e.g., 26a-26n) to maintain a selected set-point in one or more of the process streams, such as a desired pressure, a desired component composition, and/or a desired flow rate. The ratio of the total surface area of membrane separation stages 1, 1a to the total surface area of membrane separation stages 2, 2a may be selected based on the configuration and needs of the specific system. Adjusting the ratio of the total surface area of the first membrane separation stage 1, 1a to the total surface area of the second membrane separation stage 2, 2a may enable, for example, the use of smaller or larger capacity compressors to be used in conjunction with system 10, 10a to adapt the system 10, 10a to specific needs.

As another example, the controller 36, 36a, 36b may be programmed to acquire one or more process parameters in the system 10, 10a, 10b using the one or more process measuring devices (e.g., 26a-26n) and adjust the total surface area of the one or more membrane separation stages 1, 2, 1a, 2a, 3a, 1b and/or the one or more gas drying modules 11, 11a, 11b by closing (e.g., to decrease surface area) or opening (e.g., to increase surface area) the valves to the first gas separation membrane unit 60a, the second gas separation membrane unit 60b, and/or the one or more additional gas separation membrane units 60n.

For example, if the flow rate of the gas mixture to system 10, 10a, 10b decreases, which may be measured using the inlet gas line measuring device 26a or the feed gas line measuring device 26b, it may be advantageous to reduce the total surface area of the one or more membrane separation stages 1, 2, 1a, 2a, 3a, 1b and/or the one or more gas drying modules 11, 11a, 11b to maximize efficiency and to maintain selected set-points during operation. This may be done, for example, by closing the one or more additional interior control valves 64n, the one or more additional permeate control valves 70n, and the one or more additional retentate control valves 72n in response to the change in flow rate of the gas mixture to the system 10, 10a, 10b.

Alternatively, if the flow rate of the gas mixture to the system 10, 10a, 10b increases, it may be advantageous to increase the total surface area of the one or more membrane separation stages 1, 2, 1a, 2a, 3a, 1b. This may be done, for example, by opening the one or more additional inlet interior valve 64n, the one or more additional permeate valve 70n, and the one or more additional retentate valve 72n in response to the change in flow rate of the gas mixture to the system 10, 10a, 10b.

**Methods for Separating or Drying a Gas Mixture**

A method for separating a gas mixture is provided. In some instances, the method comprises: (a) providing a gas mixture comprising methane, carbon dioxide, and water; (b) feeding the gas mixture to a first membrane stage to separate the gas mixture into a first retentate stream and a first permeate stream; and (c) feeding the first permeate stream to a process gas drying module to remove water from the first permeate stream and form a dehydrated gas stream.

In some instances, the dehydrated gas stream contains less than 10 ppm by volume water. In some instances, the dehydrated gas stream may be imparted with a dewpoint of no more than -20°C to no less than -75°C. In yet other instances, the dehydrated gas stream contains less than about 10 ppm by volume water. In further instances, the dehydrated gas stream may be imparted with a dewpoint of no more than about -20°C to no less than about -75°C.

In some instances, the first retentate stream is fed to a second membrane stage to separate the first retentate stream into a second retentate stream and a second permeate stream. In some instances, the first permeate stream (or, if the first permeate stream is first provided to an optional gas transport device, the discharge stream of the optional gas transport device, as shown in FIG. 2) is fed to a third membrane stage to separate the first permeate stream (or the discharge stream of the optional gas transport device) into a third retentate stream and a third permeate stream.

In some instances, the process gas drying modules may be membrane-based drying modules, each module comprising at least one gas drying membrane designed to allow water in the process streams to selectively pass through the membrane, as permeate, while retaining the other components of the process streams, as retentate. Thus, the process gas drying modules may generate retentate streams imparted with a moisture content lower than the moisture content of the streams provided to the process gas drying module, i.e., dehydrated product streams or dehydrated gas streams.

In some instances, the one or more membrane(s) of the process gas drying module 11, 11a, 11b may be provided in the form of a polymeric membrane that is highly selective for water. In some instances, the one or more gas separation membranes of the gas drying module 11, 11a, 11b may be imparted with a $H_2O/CO_2$ selectivity value of 1 to 2000 (or about 1 to about 2000). For example, the one or more gas separation membranes of the gas drying module 11, 11a, 11b may be imparted with a $H_2O/CO_2$ selectivity value of at least about 10, or at least about 10 to at least about 100, or at least about 10 to at least about 250, or at least about 10 to at least about 500, or at least about 10 to at least about 750, or at least about 10 to at least about 1000, or at least about 10 to at least about 1250, or at least about 1500 to at least about 1750, or at least about 2000. As an additional example, the one or more gas separation membranes of the gas drying module 11, 11a, 11b may be imparted with a $H_2O/CO_2$ selectivity value of at least 10, or at least 10 to at least 100, or at least 10 to at least 250, or at least 10 to at least 500, or at least 10 to at least 750, or at least 10 to at least 1000, or at least 10 to at least 1250, or at least 1500 to at least 1750, or at least 2000. It is to be understood that the $H_2O/CO_2$ selectivity may be imparted with any value falling within any minimum or maximum value described above.

In certain instances, the membrane(s) of the process gas drying module may comprise polydimethylsiloxane. In some such instances, the membrane(s) of the process gas drying module may be provided in the form of a hollow-fiber membrane. In some instances, the process gas drying module is provided in the form of a Fluidpro® membrane-based dryer sold by Pentair, Inc. Suitable membrane-based dryers also include PRISM® membrane dryers sold by Air Products (Allentown, PA), membrane dryers available from the Donaldson Company, Inc. (Leuven, Belgium), membrane dryers available from Atlas Copco (Rock Hill, SC), and membrane dryers available from Parker (Haverhill, MA).

In some instances, the first retentate stream may be fed to a second membrane stage to separate the first retentate stream into a second retentate stream and a second permeate stream. In some instances, the first permeate stream (or, if the first permeate stream is first provided to an optional gas transport device, the discharge stream of the optional gas transport device, as shown in FIG. 2) may be fed to a third membrane stage to separate the first permeate stream (or the discharge stream of the optional gas transport device) into a third retentate stream and a third permeate stream.

In some instances, the concentration of methane in the second retentate stream is greater than the concentration of methane in the gas mixture or the first retentate stream. In some instances, the first membrane separation stage may comprise a first plurality of membranes having a first total membrane surface area. In some instances, the membrane dryer comprises a second plurality of membranes having a second total membrane surface area. In some instances, the second membrane separation stage comprises a third plurality of membranes having a third total membrane surface area. In some instances, the third membrane separation stage comprises a fourth plurality of membranes having a fourth total membrane surface area.

In some instances, the method for separating a gas mixture further comprises cooling, condensing, and/or liquefying the dehydrated gas stream to form a stream of carbon dioxide product.

In some instances, the dehydrated gas stream generated by the method may be imparted with a concentration of water that is less than the concentration of water of the gas mixture of the gas source. In some instances, the dehydrated gas stream may be imparted with a concentration of water that ranges from about 0 ppm to about 200 ppm by volume, or about 0 ppm by volume to about 50 ppm by volume, or about 0 ppm by volume to about 25 ppm by volume. In other instances, the dehydrated gas stream may be imparted with a concentration of water that ranges from 0 ppm to 200 ppm by volume, or 0 ppm by volume to 50 ppm by volume, or 0 ppm by volume to 25 ppm by volume. For example, the dehydrated gas stream may be imparted with a concentration of water that is no more than 200 ppm by volume, or no more than 100 ppm by volume, or no more than 50 ppm by volume, or no more than 25 ppm by volume, or no more than 20 ppm by volume, or no more than 15 ppm by volume, or no more than 14 ppm by volume, or no more than 13 ppm by volume, or no more than 12 ppm by volume, or no more than 11 ppm by volume, or no more than 10 ppm by volume, or no more than 9 ppm by volume, or no more than 8 ppm by volume, or no more than 7 ppm by volume, or no more than 6 ppm by volume, or no more than 5 ppm by volume, or no more than 4 ppm by volume, or no more than 3 ppm by volume, or no more than 2 ppm by volume, or no more than 1 ppm by volume, or no more than 0.1 ppm by volume, or no more than 0.05 ppm by volume, or no more than 0.01 ppm by volume, or no more than 0.001 ppm by volume. As an additional example, the dehydrated gas stream may be imparted with a concentration of water that is no more than about 200 ppm by volume, or no more than about 100 ppm by volume, or no more than about 50 ppm by volume, or no more than about 25 ppm by volume, or no more than about 20 ppm by volume, or no more than about 15 ppm by volume, or no more than about 14 ppm by volume, or no more than about 13 ppm by volume, or no more than about 12 ppm by volume, or no more than about 11 ppm by volume, or no more than about 10 ppm by volume, or no more than about 9 ppm by volume, or no more than about 8 ppm by volume, or no more than about 7 ppm by volume, or no more than about 6 ppm by volume, or no more than about 5 ppm by volume, or no more than about 4 ppm by volume, or no more than about 3 ppm by volume, or no more than about 2 ppm by volume, or no more than about 1 ppm by volume, or no more than about 0.1 ppm by volume, or no more than about 0.05 ppm by volume, or no more than about 0.01 ppm by volume, or no more than about 0.001 ppm by volume.

In some instances, the dehydrated gas stream generated by the method may be imparted with a dewpoint. The dewpoint may be imparted with a value of -20°C to -75°C. For example, the dewpoint may be imparted with a value of no more than about -20°C, or no more than about -25°C, or no more than about -30 °C, or no more than about -35°C, or no more than about -40°C, or no more than about -45°C, or no more than about -50°C, or no more than about - 55°C, or no more than about -60°C, or no more than about -65°C, or no more than about -70°C, or no more than about -75°C. As an additional example, the dewpoint may be imparted with a value of no more than -20°C, or no more than -25°C, or no more than -30°C, or no more than -35°C, or no more than -40°C, or no more than -45°C, or no more than -50°C, or no more than -55°C, or no more than -60°C, or no more than -65°C, or no more than -70°C, or no more than -75°C.

In other instances, the dewpoint may be imparted with a value of no less than about -20°C, or no less than about -25°C, or no less than about -30°C, or no less than about -35°C, or no less than about -40°C, or no less than about -45°C, or no less than about -50°C, or no less than about -55°C, or no less than about -60°C, or no less than about -65°C, or no less than about -70°C, or no less than about -75°C. As an additional example, the dewpoint may be imparted with a value of no less than -20°C, or no less than -25°C, or no less than -30 °C, or no less than -35°C, or no less than -40°C, or no less than -45°C, or no less than -50°C, or no less than -55°C, or no less than -60°C, or no less than -65°C, or no less than -70°C, or no less than -75°C.

In some instances, the pressure of the dehydrated gas stream may be imparted with a value of at least 1 bar to at least 20 bar. For example, the pressure of the dehydrated gas stream may be imparted with a value of at least 2 bar, or at least 3 bar, or at least 4 bar, or at least 5 bar, or at least 6 bar, or at least 7 bar, or at least 8 bar, or at least 9 bar, or at least 10 bar, or at least 11 bar, or at least 12 bar, or at least 13 bar, or at least 14 bar, or at least 15 bar, or at least 16 bar, or at least 17 bar, or at least 18 bar, or at least 19 bar, or at least 20 bar.

As an additional example, the pressure of the dehydrated gas stream may be imparted with a value of at least about 1 bar to at least about 20 bar. The pressure of the dehydrated gas stream may be imparted with a value of at least about 2 bar, or at least about 3 bar, or at least about 4 bar, or at least about 5 bar, or at least about 6 bar, or at least about 7 bar, or at least about 8 bar, or at least about 9 bar, or at least about 10 bar, or at least about 11 bar, or at least about 12 bar, or at least about 13 bar, or at least about 14 bar, or at least about 15 bar, or at least about 16 bar, or at least about 17 bar, or at least about 18 bar, or at least about 19 bar, or at least about 20 bar.

Advantageously, the method may allow for a reduction in the total amount of energy required to operate the system, as the use of the process gas drying module, which may utilize off-gas from a downstream unit as sweep gas, may eliminate the need for a dryer unit (e.g., based on semi-continuous temperature swing adsorption). This may also reduce the overall footprint of the system, as compared to other systems. For example, the use of the process gas drying module may eliminate the need for a dryer unit, which may require regeneration, to remove moisture from the first permeate stream (or, if the first permeate stream is first provided to one or more optional gas transport devices, the discharge stream of the optional one or more gas transport devices).

As would be appreciated by one having skill in the art, the above-described method may include fewer steps or additional steps than those described herein. In addition, any of the steps of the above-described method may be repeated more than once or omitted. Furthermore, the above-described method may be carried out using any of the systems 10, 10a, 10b and/or variations of the systems 10, 10a, 10b, described with reference to FIGS. 1-3. Thus, the parameters of the above-described method (e.g., the pressure of the dehydrated gas stream, the concentration of water in the dehydrated gas stream, the $H_2O/CO_2$ selectivity value of the one or more membranes of the gas drying module) may be imparted with any of the values described with reference to FIGS. 1-3.

**Examples**

The following examples set forth, in detail, ways in which the system 10, 10a, 10b dries a gas stream and will enable one of skill in the art to more readily understand the principles thereof. The following examples are presented by way of illustration and are not meant to be limiting in any way.

Example 1

Table 1 illustrates simulation data from an example process as depicted in FIG. 1. The results of the simulation are shown in Table 1 below.

**Table 1**

| Drawing Reference Number | 17 | 18 | 19 | 21 |
|---|---|---|---|---|
| Stream Name | third gas transport device discharge stream | dehydrated gas stream | sweep stream | hydrated sweep stream |
| Temperature (°C) | 12 | 12 | 32 | 32 |
| Pressure (bar(g)) | 18 | 18 | 0.20 | 0.20 |
| Mass Flow Rate (kg/h) | 2600 | 2600 | 290 | 290 |
| Component (mol %) | | | | |
| Water | 0.085 | 0.0000030 | 0 | 0.00064 |
| Methane | 7.1 | 7.1 | 26 | 27 |
| Carbon Dioxide | 91 | 91 | 68 | 68 |
| Nitrogen | 0.24 | 0.24 | 0.90 | 0.90 |
| Oxygen | 1.3 | 1.3 | 4.6 | 4.7 |

As shown in Table 1 and referring to the components described with reference to FIG. 1, the dehydrated gas stream 18 has a decreased water content (0.0000030 mol % or 0.03 ppm(v)) as compared to the water content (0.085 mol % or 850 ppm(v)) of the third gas transport device discharge stream 17 that is fed into the process gas drying module 11.

Example 2

Table 2 illustrates simulation data from example processes including either a single membrane separation module or a series of membrane separation modules. The results of the simulation are shown in Table 2 below.

**Table 2**

| System | Stream | Temperature (°C) | Pressure (bar(g)) | Mass Flow Rate (kg/h) | Dewpoint |
|---|---|---|---|---|---|
| Single Module | feed gas | 13.5 | 17.4 | 327 | -25.2°C |
| | dehydrated gas stream | 14 | 17.3 | 312 | -65°C |
| Single Module | feed gas | 13.3 | 17.6 | 322 | -25.3°C |
| | dehydrated gas stream | 14 | 17.4 | 307 | -64°C |

(continued)

| System | Stream | Temperature (°C) | Pressure (bar(g)) | Mass Flow Rate (kg/h) | Dewpoint |
|---|---|---|---|---|---|
| Modules in Series | feed gas | 11 | 16.6 | 455 | -25°C |
| | dehydrated gas stream | 11 | 16.1 | 438 | -65°C |
| Modules in Series | feed gas | 11 | 16.6 | 445 | -24.9°C |
| | dehydrated gas stream | 12 | 16.2 | 426 | -65°C |
| Modules in Series | feed gas | 10 | 15.2 | 600 | -23.8°C |
| | dehydrated gas stream | 10 | 14.3 | 582 | -66°C |

As shown in Table 2, the dehydrated gas streams have lower dewpoints (i.e., -64°C to -66°C) as compared to the dewpoints of the feed gas streams (i.e., -23.8°C to -25°C).

The present disclosure has described one or more preferred instances, and it should be appreciated that many equivalents, alternatives, variations, and modifications, aside from those expressly stated, are possible and within the scope of the invention. For example, the structure, arrangement, and elements of the system described herein include alternative design choices and serve the purpose of adapting the system to specific needs, such as specific input compositions or pressures, or specific output purity or yield.

**Claims**

1. A system for separating a gas mixture, the system comprising:

    a source of the gas mixture, wherein the gas mixture comprises methane, carbon dioxide, and water;
    a first membrane stage in fluid communication with the source of the gas mixture, the first membrane stage designed to separate the gas mixture into a first retentate stream and a first permeate stream;
    a process gas drying unit including a membrane, wherein the process gas drying unit is in fluid communication with the first permeate stream and is designed to create a dehydrated gas stream from the first permeate stream;
    a measuring device designed to measure a parameter of the dehydrated gas stream to determine a measured value;
    a valve in fluid communication with the process gas drying unit; and
    a controller in electrical communication with the measuring device and the valve, wherein the controller is designed to actuate the valve in response to the measured value.

2. The system of claim 1, wherein a permeate sweep stream is provided to the process gas drying unit, and the dehydrated gas stream is imparted with a dewpoint of no more than about -20°C to no less than about -75°C.

3. The system as in claim 1 or 2, wherein a pressure of the dehydrated gas stream is imparted with a value of about 2 bar to about 20 bar.

4. The system as in any of claims 1 to 3, wherein the dehydrated gas stream is imparted with a concentration of water that is less than about 10 ppm(v).

5. The system as in any of claims 1 to 4, wherein the parameter is selected from the group consisting of a pressure value, a temperature value, a flow rate, a composition value, a viscosity value, a humidity value, a moisture content value, a dewpoint value, a density value, and combinations thereof.

6. The system as in any of claims 1 to 5, wherein the controller is designed to:

    determine a comparison of the measured value with a set-point value of the parameter, and
    actuate or maintain a position of the valve based on the determination.

7. The system as in any of claims 1 to 6 further comprising a gas recovery unit that produces a purified product stream and an off-gas, wherein the off-gas is provided to the process gas drying unit as a sweep stream.

8. The system as in any of claims 1 to 7 further comprising a second membrane stage in fluid communication with the first membrane stage, the second membrane stage designed to separate the first retentate stream into a second retentate stream and a second permeate stream.

9. The system as in any of claims 1 to 7 further comprising a second membrane stage in fluid communication with the first membrane stage, the second membrane stage configured to separate the first permeate stream into a second retentate stream and a second permeate stream.

10. A method for separating a gas mixture, the method comprising:

   providing the gas mixture comprising methane, carbon dioxide, and water;
   feeding the gas mixture to a first membrane stage to separate the gas mixture into a first retentate stream and a first permeate stream;
   feeding the first permeate stream to a membrane dryer to remove the water from the first permeate stream; and
   producing a dehydrated gas stream, wherein the dehydrated gas stream is imparted with a dewpoint of no more than about -20°C to no less than about -75°C.

11. The method of claim 10 further comprising:

   providing the dehydrated gas stream to a gas recovery unit that generates a purified product gas and an off-gas; and
   providing the off-gas to the membrane dryer as a sweep gas.

12. The method as in claim 10 or 11 further comprising feeding the first retentate stream to a second membrane stage to separate the first retentate stream into a second retentate stream and a second permeate stream.

13. The method of claim 12, wherein a first concentration of methane in the second retentate stream is greater than a second concentration of methane in the gas mixture or the first retentate stream.

14. The method as in any of claims 10 to 13 further comprising condensing the dehydrated gas stream to form a liquefied stream of purified carbon dioxide.

15. The method as in any of claims 10 to 14, wherein a membrane of the membrane dryer is imparted with a $H_2O/CO_2$ selectivity of about 1 to about 2000.

FIG. 1

EP 4 721 838 A1

FIG. 2

EP 4 721 838 A1

FIG. 3

FIG. 4

18,18a,18b

43,43a,43b

19,19a,19b,19c

74

76

80

44,44a,44b

FIG. 5

Europäisches Patentamt
European Patent Office
Office européen des brevets

# EUROPEAN SEARCH REPORT

**Application Number**

EP 25 20 6056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/232985 A1 (JENSVOLD JOHN A [US] ET AL) 16 September 2010 (2010-09-16) | 1-6, 8-10,12, 13,15 | INV.<br>B01D53/00<br>B01D53/22 |
| Y | * Figures: 1<br>Claims: 1<br>Paragraphs: 17,27,24 * | 7,11,14 | B01D53/26<br>B01D53/30 |
| | ----- | | |
| X | US 2017/157557 A1 (DING YONG [US] ET AL) 8 June 2017 (2017-06-08) | 1-6, 8-10,12, 13,15 | |
| Y | * Figures: 3B<br>Claims: 1<br>Paragraphs: 66, 67 * | 7,11,14 | |
| | ----- | | |
| A | US 2018/283779 A1 (EDA MASAYUKI [US] ET AL) 4 October 2018 (2018-10-04)<br>* Figures: 3<br>Paragraphs: 63 * | 1 | |
| | ----- | | |
| A | EP 0 778 068 B1 (PERMEA INC [US]) 5 September 2001 (2001-09-05)<br>* Figures: 1, 2<br>Claims: 10 * | 2 | **TECHNICAL FIELDS SEARCHED (IPC)**<br><br>B01D |
| | ----- | | |
| Y | KR 2021 0104469 A (KOREA ELECTRIC POWER CORP [KR]; KOREA WESTERN POWER CO LTD [KR] ET AL.) 25 August 2021 (2021-08-25)<br>* Figures: 2<br>Paragraphs: 81-96 * | 7,11,14 | |
| | ----- | | |

The present search report has been drawn up for all claims

| Place of search | Date of completion of the search | Examiner |
|---|---|---|
| Munich | 24 February 2026 | Accettola, Francesca |

EPO FORM 1503 03.82 (P04C01)

## ANNEX TO THE EUROPEAN SEARCH REPORT
## ON EUROPEAN PATENT APPLICATION NO.

EP 25 20 6056

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2026

| Patent document cited in search report | | Publication date | Patent family member(s) | | Publication date |
|---|---|---|---|---|---|
| US 2010232985 A1 | | 16-09-2010 | NONE | | |
| US 2017157557 A1 | | 08-06-2017 | AU | 2016362424 A1 | 28-06-2018 |
| | | | BR | 112018011305 A2 | 27-11-2018 |
| | | | CN | 108463280 A | 28-08-2018 |
| | | | EP | 3383520 A1 | 10-10-2018 |
| | | | MY | 192174 A | 04-08-2022 |
| | | | PH | 12018501172 A1 | 21-01-2019 |
| | | | US | 2017157557 A1 | 08-06-2017 |
| | | | WO | 2017096149 A1 | 08-06-2017 |
| US 2018283779 A1 | | 04-10-2018 | NONE | | |
| EP 0778068 B1 | | 05-09-2001 | AU | 680800 B1 | 07-08-1997 |
| | | | CA | 2191826 A1 | 09-06-1997 |
| | | | CN | 1159958 A | 24-09-1997 |
| | | | DE | 69614979 T2 | 04-04-2002 |
| | | | DK | 0778068 T3 | 15-10-2001 |
| | | | DZ | 2138 A1 | 26-10-2002 |
| | | | EP | 0778068 A1 | 11-06-1997 |
| | | | MY | 123051 A | 31-05-2006 |
| | | | NO | 314983 B1 | 23-06-2003 |
| | | | RU | 2119376 C1 | 27-09-1998 |
| | | | US | 5641337 A | 24-06-1997 |
| KR 20210104469 A | | 25-08-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63702115